# EUROPEAN PATENT SPECIFICATION

(11) **EP 4 502 873 B1**
(45) Date of publication and mention of the grant of the patent: **21.10.2026**
(21) Application number: 23188588.0
(22) Date of filing: 31.07.2023
(51) Int. Cl.: G06N 10/60, B60L 53/62, B60L 53/63, B60L 53/64, B60L 53/67, B60L 58/13, B60L 58/18, G06N 10/20

(54) **METHOD AND SYSTEM FOR SOLVING OPTIMIZATION PROBLEMS**
VERFAHREN UND SYSTEM ZUR LÖSUNG VON OPTIMIERUNGSPROBLEMEN
PROCÉDÉ ET SYSTÈME POUR RÉSOUDRE DES PROBLÈMES D'OPTIMISATION

(43) Date of publication of application: 05.02.2025
(73) Proprietor: Honda Research Institute Europe GmbH, 63073 Offenbach/Main (DE)
(72) Inventor: Schmitt, Sebastian, 63073 Offenbach am Main (DE); Hauke, Philipp, 38122 Trento (IT); Roggero, Alessandro, 38122 Trento (IT); Bottarelli, Alberto, 38122 Trento (IT)
(74) Representative: Beder, Jens

(56) References cited:
- ELIAS X HUBER ET AL: "Exponential Qubit Reduction in Optimization for Financial Transaction Settlement", ARXIV.ORG, CORNELL UNIVERSITY LIBRARY, 201 OLIN LIBRARY CORNELL UNIVERSITY ITHACA, NY 14853, 14 July 2023 (2023-07-14), XP091569016
- PABLO D\'IEZ-VALLE ET AL: "Multiobjective variational quantum optimization for constrained problems: an application to Cash Management", ARXIV.ORG, CORNELL UNIVERSITY LIBRARY, 201 OLIN LIBRARY CORNELL UNIVERSITY ITHACA, NY 14853, 8 February 2023 (2023-02-08), XP091432512
- GARCIA DE ANDOIN M ET AL: "Formulation of the Electric Vehicle Charging and Routing Problem for a Hybrid Quantum-Classical Search Space Reduction Heuristic", ARXIV.ORG, CORNELL UNIVERSITY LIBRARY, 201 OLIN LIBRARY CORNELL UNIVERSITY ITHACA, NY 14853, 7 June 2023 (2023-06-07), XP091532698

## Description

The invention relates to a method implemented on a hybrid quantum-classical computer system for obtaining one or more optimal solutions to a given classical constrained optimization problem and a hybrid quantum-classical computer system implementing such method.

Quantum optimization is a very active field of research. The current generation of quantum computing hardware devices is still limited in sizes and subject to noise. The usefulness of these so-called noisy intermedia scale quantum (NISQ) devices for application problems is currently being tested and evaluated on many real-world application problems.

Conventional hybrid quantum-classical approaches employ a unitary circuit, potentially subject to environmental noise or dissipation, which uses a phase Hamiltonian (also called cost Hamiltonian) which depends on, or is expressed as, a function of the objective function of the original classical optimization problem. The vast majority of current approaches start by re-formulating the original problem and transforming it into the form of a quadratic unconstrained binary optimization (QUBO) problem. However, current functional forms which can be handled efficiently with hybrid quantum optimization approaches on current and future quantum hardware devices are very limited, thus strongly limiting the types of problems, i.e., the functional form of the objective functions for the optimization problems, to be solved.

Although details may vary between different types of quantum hardware platforms, the phase Hamiltonians are mostly limited to very low-order polynomials in the decision variables (typically linear and quadratic terms) and also the number of non-local interactions between different variables cannot be arbitrarily high, due to the limited connectivity of the hardware devices' couplings.

The current state of the art approaches for solving optimization problems having several constraints using quantum devices are hybrid quantum-classical algorithms as described for example in "Quantum Approximate Optimization with Hard and Soft Constraints", Proceedings of the Second International Workshop on Post Moores Era Supercomputing, pp. 15-21, and "From the quantum approximate optimization algorithm to a quantum alternating operator ansatz", Algorithms 12 (2019). These approaches employ a parametrized quantum circuit (PQC) that is designed such that the variations induced on the measurement basis states, typically done by a so-called mixing unitary, preserve the constraints and when the initial state in the PQC meets all constraints, the unitary operation of the PQC does not leave the feasible solutions set and does not lead to a violation of the constraints. Devising such constraint-preserving unitary operations can nevertheless be done efficiently only for very few problems, and the unitary operations have to be specifically designed for each problem.

In "Quantum approximate optimization algorithm for qudit systems", Phys. Rev. A 107, 062410 (2023), auxiliary qubits or qudits are used for measuring the constraints violation and altering the unitary gate operation in the PQC conditioned on the measured results.

Other approaches add equality constraints to the cost Hamiltonian as penalty terms, which are quadratic in the constraint-defining equation. However, adding quadratic penalties to the cost function may lead to an all-to-all or at least long-ranged coupling between the variables used in the constraint-defining equation, and may lead to higher order terms due to the squaring operation.

Inequality constraints are usually first transformed into equality constraints by introducing additional slack variables and then these are added to the cost function via quadratic penalty terms. However, the optimization problem is increased in size, i.e. the number of search variables increases, due to the addition of the auxiliary slack variables, which increases its complexity and difficulty.

Methods based on augmented Lagrangian optimization and dual formulation utilizing Hubbard-Stratonovich transformation are considered for example in "Solving Inequality-Constrained Binary Optimization Problems on Quantum Annealer", arXiv:2012.06119", "Breaking limitation of quantum annealer in solving optimization problems under constraints", Scientific Reports 10, 3126, https://doi.org/10.1038/s41598-020-60022-5", "Applying the Hubbard-Stratonovich Transformation to Solve Scheduling Problems Under Inequality Constraints With Quantum Annealing", Front. Phys. 9, doi: 10.3389/fphy.2021.730685, and "Approaches to Constrained Quantum Approximate Optimization", SN Computer Science 4, 183. Those methods transform the original problem to a dual formulation, which have many additional parameters and which are similar to the original problem, but avoid the quadratic overhead in the constraint handling. However, solving one original problem instance requires to solve many different dual optimization problems, increasing the effort substantially.

Variational quantum eigensolver (VQE) approaches, given for example in "The variational quantum eigensolver: a review of methods and best practices", Physics Reports, 986, 1-128, utilize different types of unitary operators. However, there are no explicit methods for including realistic constraints into VQE. If constraints are considered, they are included by one of two ways: a) designing a variational quantum circuit that does not leave the feasible space of solutions, i.e. employing constraint preserving unitary operations in the quantum circuit, or b) by including the constraints only in the classical optimization routine.

In "Multiobjective variational quantum optimization for constrained problems: an application to Cash Management", arXiv:2302.04196, a VQE quantum circuit is employed and coupled to a classical NSGA-II algorithm. With this approach two objective functions are calculated classically from the quantum state prepared by the quantum apparatus: 1) the cost function that implements the actual minimization goal and 2) the probability to find feasible solutions in the final state. The target is to arrive at an optimal solution point, where the probability to find feasible solutions is very close to one and the cost function is minimized. In such, this method handles the constraints and the classical two-objective optimization is used to explore the search space of feasible and infeasible solutions and zoom in the feasible subspace.

Despite the problems being attacked becoming more realistic in nature, current solutions either do not explicitly consider constrained problems or employ one of the state-of-the-art methods mentioned above. Further, some of them are solved using purely classical computers.

ELIAS X HUBER ET AL: "Exponential Qubit Reduction in Optimization for Financial Transaction Settlement", ARXIV.ORG, arXiv: 2307.07193v1, CORNELL UNIVERSITY LIBRARY, 201 OLIN LIBRARY CORNELL UNIVERSITY ITHACA, NY 14853, 14 July 2023, discloses an extension of a qubit-efficient encoding by providing explicit formulas of the cost objective and its gradient for arbitrary number of ancilla qubits.

There is still a need to address optimization problems including several linear or non-linear constraints in an efficient manner using both classical and quantum hardware devices.

The current invention addresses the above mentioned problem to find solutions of realistic real world problems, specifically known from the energy management domain, on current and future quantum hardware devices employing a quantum-classical approach according to the method and computer system defined in the independent claims.

The dependent claims define advantageous aspects and features. In the following, parts of the description and drawings referring to embodiments which are not covered by the claims are not embodiments of the invention, but are examples useful for understanding the invention.

The invention encompasses the utilization of the quantum superposition, which is inherent to quantum states, as a resource to encode one or more solutions of a classical optimization algorithm. The one or more optimal solutions are found and provide optimized values (optimal or close to optimal values) of a cost function *C*(*x*) that is a linear or non-linear function of one or more decision variables *x*, and where the one or more optimal solutions fulfills one or more constraints. The constraints are defined by functions of the decision variables *x*, which indicate the fulfillment of the constraint by attaining certain ranges of function values and that have a non-linear complex functional form. Further, the quantum circuit that implements such a quantum superposition is designed in a way that surrogate phase operators are able to efficiently handle the non-linear cost functions and non-linear constraints.

A method and a hybrid quantum-classical computer system for obtaining one or more optimized solutions *xₒₚₜ* to a given classical constraint linear or non-linear optimization problem, where each solution is specified and identified by a set of parameters *γ_{t, opt},* where the one or more optimized solutions provide optimized values of a cost function *C*(*x*), the cost function *C*(*x*) being a linear or non-linear function of one or more decision variables x, and where the one or more optimal solutions fulfill one or more constraints, the one or more constraints comprising a set of one or more equality constraints defined by *fᵢ*(*x*) = 0 with *i* = 1, ..., *N_{Eq}* and/or a set of one or more inequality constraints defined by *gⱼ*(*x*) ≤ 0 with *j* = 1, .. , *N_{InEq},* where each equality constraint and each inequality constraint comprises a non-linear complex functional form, are provided as defined in the appended set of claims.

The invention will now be further described with reference to the attached drawings, in which
- Fig. 1: shows a schematic of a hybrid quantum-classical computer system according to a preferred implementation of the invention.
- Fig. 2: shows a schematic of a flowchart for a method performed by a hybrid quantum-classical computer system according to the preferred implementation of the invention.

*The proposed method and hybrid quantum-classical computer system target to solve* for the solution of optimization problems which have highly non-linear cost functions and have arbitrary many inequality and equality constraints, which can also have arbitrary non-linear forms. In particular, the inventive method and system according to this invention devise a scalable approach that does not lead to overhead in terms of auxiliary qubits/qudit, qubit/qudit-interactions or qubit/qudit-slack variables for large problems with many constraints.

Further, this invention eliminates the need to formulate the problem as a QUBO problem, which is typically required for the current state-of-the-art approaches, thereby offering a scalable approach to complex realistic, typically highly non-linear optimization problems with many typically also highly non-linear constrains on current and future quantum hardware devices. The claimed system and method implement a hybrid quantum-classical optimization or sampling approach comprising a PQC that may be executed on a universal or special-purpose quantum computing device and that is coupled to a classical computer which performs a classical parameter estimation and optimization algorithm to minimize the cost function, thereby obtaining an optimal or near-optimal solution or samples of solutions of the original problem.

Further, by using the superposition of classical solutions in the quantum state of the PQC, representative values of the cost function and the constraint functions for the quantum state of the PQC can be generated and subsequently used by a classical optimizer routine to steer the optimization toward increasing the probability to find feasible solutions. The representative values represent the quality (in terms of cost function value) and feasibility (indicated by the amount of constraint violation) of the solutions represented by said superpositions in the quantum state of the PQC.

According to this description, the expression "classical" always refers to known computation as performed in the past using digital computer systems only.

In this description the terms classical optimization algorithm and classical optimizer may be used interchangeably. Further, the terms unitary operation and unitary may be used interchangeably. Moreover, in this description, an unitary operation is achieved by a respective unitary operator.

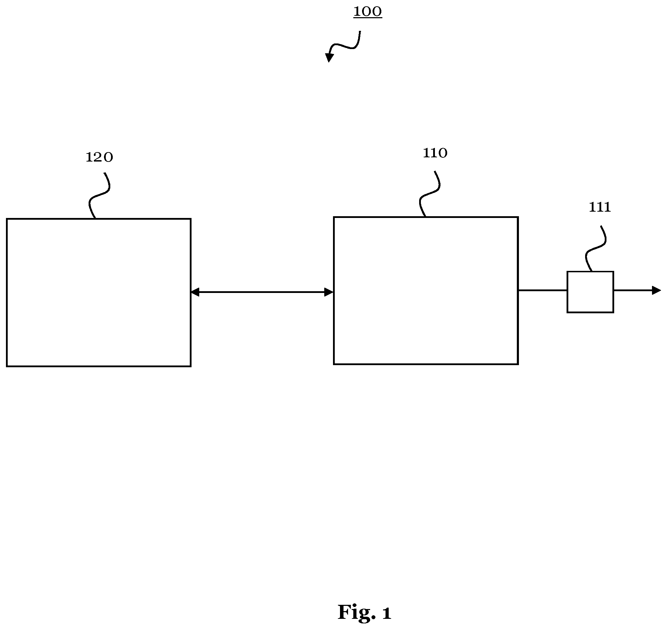

Fig. 1 shows a schematic view of a hybrid quantum-classical computer system 100 according to a preferred embodiment of the invention.

The hybrid quantum-classical computer system 100 comprises a classical computation component 110 and a quantum computation component 120. The classical computation component 110 may be a classical computer, and the quantum computation component 120 is a universal or special-purpose purpose quantum computing device.

The quantum computation component 120 and the classical computation component 110 may be realized as two separate entities being capable of exchanging information. Alternatively, they may be integrated into one device.

Both components 120, 1120 are configured to transfer and receive information from the respective other component such that a shared computation can be achieved in order to solve a classical constraint linear or non-linear optimization problem, that is, obtaining and providing with one or more optimal solutions *xₒₚₜ* 111 to the classical constraint linear or non-linear optimization problem, each of which is specified and identified by a set of parameters *γ_{t, opt}.* The one or more optimal solutions provide the best performance, or at least sufficiently good performance, of the problem to be solved so that said optimal solutions give minimal values, or at least sufficiently low values, of a cost function *C*(*x*)*.* The cost function *C*(*x*) is an arbitrary function of one or more decision variables *x*, i.e., it can be linear, polynomial with arbitrary degree or any other non-linear function.

Further, the solutions *x* for the optimization problem must fulfill one or more constraints. The one or more constraints comprise a set of one or more equality constraints and/or a set of one or more inequality constraints given in Equations (1) and (2) respectively: ${f}_{i} \left(x\right) = 0 with i = 1 , … , {N}_{Eq}$ (1) ${g}_{j} \left(x\right) \leq 0 with j = 1 , .. , {N}_{InEq}$ (2)

The functional dependence of each of the equality constraints *fᵢ*(*x*) and each of the inequality constraints *gⱼ*(*x*) comprises an arbitrary non-linear complex functional form.

A solution *x* of the classical constraint linear or non-linear optimization problem is determined by a set of parameters *γₜ.* Further, each solution *x* is encoded by a quantum state |*x*〉, which can be a qubit (i.e., a quantum two-level system) or qudit (i.e., a quantum multi-level system). Each of those states is a basis state in a measurement basis of the quantum computation component and they fulfil the orthonormality condition 〈*x'*|*x*〉 = *δ_{x', x}* where *δ_{x'}*, *ₓ* is the Kronecker delta.

This encoding means that all possible solutions to the classical constraint linear or non-linear optimization problem are represented by the measurement basis states of the quantum computation component. One advantage of using a quantum computation component for approaching this problem is given by the fact that a general quantum state is a superposition of all basis states, i.e., a superposition of all possible solutions to the classical problem, $\left|ϕ\right〉 = {\sum }_{c = 1}^{{D}_{H}} {ξ}_{c} \left|{x}_{c}\right〉$ with complex coefficients ${ξ}_{c} ∈ ℂ$, where Σ*_{c}*|ξ*_{c}*|² = 1 and where *c* = 1, *... , D_{H}* enumerates all basis states of the Hilbert space of dimensions *D_{H}* = *d^{N}* for a plurality of *N* qubits or a plurality of *N* qudits, with d states per qubit or qudit (i.e., *d* = 2 for each qubit or *d* > 2 for each qudit).

The invention utilizes a PQC on the quantum computation component 120, which employs unitary gate operations that are applied to a predefined fixed initial state |*ψ*₀〉. Such an application of the unitary gate operations leads to a quantum state defined in Equation (3): $\left|ψ\right〉 = U \left(γ\right) \left|{ψ}_{0}\right〉 .$ (3)

According to the invention, this state encodes a full population of *N_{S}* solutions candidates of the original problem, as expressed in Equation (4): $\left.\left|ψ\right.\right〉 = {\sum }_{i = 1}^{{N}_{s}} {ξ}_{i} \left.\left|{x}_{i}\right.\right〉 + {\sum }_{j = {N}_{S} + 1}^{{D}_{H}} {δ}_{j} \left.\left|{x}_{j}\right.\right〉$ (4) where the first sum comprises basis states with large weights and represents the full population, ${S}_{t} = {\left\{{x}_{{γ}_{t} , m}\right\}}_{m = 1}^{{N}_{M}}$*,* and the second sum is negligibly small, i.e. ${\sum }_{i = 1}^{{N}_{s}} {\left|{ξ}_{i}\right|}^{2} = 1 - ϵ$ and ${\sum }_{j = {N}_{S} + 1}^{{D}_{H}} {\left|{δ}_{j}\right|}^{2} = ϵ ≪ 1$, respectively, such that the final state truly encodes the solutions of the constraint linear or non-linear optimization problem as in Equation (5): $\left.\left|ψ\right.\right〉 \approx {\sum }_{i = 1}^{{N}_{s}} {ξ}_{i} \left.\left|{x}_{i}\right.\right〉$ (5)

A basis-state selection method, for example full state tomography, classical shadows or measurement-based sampling, allows a full set of solutions to be extracted from the quantum state, as will be explained later in this description.

Referring to Fig. 1, the quantum computation component 120 is configured to realize (or implement) a PQC by implementing the unitary quantum operation *U*(*γ*), also referred to in this description as unitary operator, comprising one or more surrogate phase operators as follows. The unitary quantum operation *U*(*γ*) according to this invention is composed of *N_{L}* layers with different choosable sets of parameters $γ = {\left\{{γ}_{l}\right\}}_{l = 1}^{{N}_{L}}$ given in Equation (6): $U \left(γ\right) = {\prod }_{l = 1}^{{N}_{L}} {U}_{l} \left({γ}_{l}\right) ,$ (6) where each layer *l* comprises multiple mixing operators and multiple phase operators (i.e., surrogate phase operators, as explained below) with separately choosable parameter sets *γ_{l,M}* and *γ_{l,P}* respectively. The unitary operator in each layer *U*(*γ*) with $γ = {\left\{{γ}_{l , M}, {γ}_{l , P}\right\}}_{l = 1}^{{N}_{L}}$ has the form given in Equation (7): ${U}_{l} \left({γ}_{l}\right) = {e}^{- i {M}_{l} \left({{γ}_{l ,}}_{M}\right)} {e}^{- {iP}_{surrogate , l} \left({{γ}_{l ,}}_{P}\right)} ,$ (7) where the surrogate phase unitaries in each layer, ~ *e^{-i P^{surrogate},l (γ)},* are generated by a Hermitian surrogate phase operator *P_{surrogate,l}* (*γ_{l,P})* that is parametrized with the freely choosable parameter sets *γ_{l,P}.*

The Hermitian surrogate phase operator *P_{surrogate,l}* (*γ_{l,P}*) is diagonal in the measurement basis, in the sense that the measurement basis states |*x*〉 are simultaneous eigenstates of the surrogate phase operators, as expressed in Equation (8): ${P}_{surrogate , l} \left({γ}_{l , P}\right) \left|x\right〉 = {p}_{l} \left({γ}_{l , P}, x\right) \left|x\right〉 ,$ (8) with real eigenvalues ${p}_{l} \left({γ}_{l , P}, x\right) ∈ ℝ$*.*

Further, the Hermitian surrogate phase operator *P_{surrogate}, ₗ*(*γ_{l,P}*) in each layer comprises the sum of elementary one-, two-, or higher order qubit gate operators or one-, two-, or higher order qudit gate operators, which can be efficiently implemented on the quantum computation component 120, where the coefficients of the terms in the sum are given by the freely choosable parameter set *γ_{l,P}.*

The mixing unitaries in each layer, ~ *e*^{*-i M^{l(γl,M}*)}, comprise the freely choosable parameters *γ_{l,M}* and are generated by mixing operators *Mₗ* in each layer. The mixing operators *Mₗ* do not commute with the surrogate phase operators, i.e. [*Mₗ* (*γ_{l,M}*), *P_{surrogate}, ₗ* (*γ_{l,P}*)] ≠ 0, ∀ *l, k* and, thus, the mixing operators generate transitions between the measurement basis states, i.e. *Mₗ*|*xₛ*〉 = Σ*ⱼm_{l,sj}*|*xⱼ*〉*.*

In an embodiment, the surrogate phase operators *P_{surrogate,l}* (*γ_{l,P}*) in each layer act on the plurality of *N* qubits or qudits, and are implemented with one or more single-qubit angular momentum operators or one or more single-qudit angular momentum operators as in Equation (9): ${P}_{surrogate , l} \left({γ}_{l , P}\right) = {\sum }_{all qudits α = 1}^{N} {γ}_{l , P , α} {L}_{z , α} + {\sum }_{all pairs \left(α, β\right) } {γ}_{l , P , α , β} {L}_{z , α} {L}_{z , β} ,$ (9) where *γ_{l,P,α}* and *γ_{l,P,α,β}* with *α, β* = 1, ..., *N* are freely choosable parameter sets indexing all the *N* qubits or qudits, and the choosable parameter sets *γ_{l,P,α,β}* acting as interaction matrix elements are symmetric, i.e. *γ_{l,P,α,β}* = *γ_{l,P,β,α}.*

In Eq. (9), *L_{z,α}* is a z-component of the angular momentum operator of a qubit or qudit *α* of total angular momentum *S* = (*d* - 1)/2 where d is the number of local quantum levels for each qubit or qudit, and comprises one or more measurement basis states |*x*〉 of the quantum computation component 120 as eigenstates, that is, ${L}_{z , α} \left|x\right〉 = \frac{1}{2} {s}_{z , α} \left|x\right〉$ with *s_{z,α}* ∈ [- *d* + 1, *-d* + 2, ..., *d -* 2,*d* - 1].

Referring to Fig. 1, the classical computation component 110 and the quantum computation component 120 are configured to transfer and receive information from the respective other component such that are jointly used to solve a classical constraint linear or non-linear optimization problem by performing an iterative procedure.

At each iteration t, the classical computation component 110 and the quantum computation component 120 are configured as follows.

The classical computation component 110 generates a set of parameters *γₜ* using the classical optimization algorithm, and subsequently sends it to the quantum computation component 120. The classical optimization algorithm may comprise, for example and not as a limitation, a single-objective black-box optimization algorithm.

The set of parameters *γₜ* may comprise the parameter sets *γ_{l,M}* and *γ_{l,P}* that are be used by the classical computation component 110 when executing the PQC. Additionally or alternatively, the set of parameters *γₜ* may comprise one or more parameters that define, or may be comprised in, the cost function *C*(*x*) and/or that that define, or may be comprised in, each of the one or more quality constraints *fᵢ*(*x*) and/or each of the inequality constraints *gⱼ*(*x*)*.* Additionally or alternatively, the set of parameters *γₜ* may comprise one or more parameters that define, or may be comprised in, the solutions *x* of the classical optimization problem.

Upon receiving the set of parameters *γₜ,* the quantum computation component 120 may initiate the execution of the PQC and the preparation of the state |*ψ*_{γ*ₜ*}〉. That is, the quantum computation component 120 generates the quantum state |*ψ_{γₜ}*〉 = *U*(*γₜ*)|*ψ*₀〉 of a plurality of *N* qubits or qudits by executing the PQC with surrogate phase unitaries and mixing unitaries as explained above, with the set of parameters *γₜ.*

The one quantum state |*ψ_{γₜ}*〉 represents a set of *N_{S}* different classical solutions ${\left\{{x}_{{γ}_{t} , c}\right\}}_{c = 1}^{{N}_{S}}$ of the classical constraint linear or non-linear optimization problem.

Next, the quantum computation component 120 uses a basis-state selection method to select a set of *N_{M}* ≥ 1 classical solutions, ${S}_{t} = {\left\{{x}_{{γ}_{t} , m}\right\}}_{m = 1}^{{N}_{M}}$*,* from the one quantum state |*ψ_{γₜ}*〉. This is expressed in Equation (10): $\left|{ψ}_{{γ}_{t}}\right〉 ⇒ {S}_{t} = {\left\{{x}_{{γ}_{t} , m}\right\}}_{m = 1}^{{N}_{M}} .$ (10)

That is, the basis-state selection method performed on the quantum computation component 120 may extract *N_{M}* basis states from the quantum state |*ψ_{γₜ}*〉 at each iteration *t.*

In an embodiment, the basis-state selection method at each iteration *t* is performed by sampling from the quantum state |*ψ_{γₜ}*〉, i.e. sampling *x* from the Born rule probability *P*(*x, γₜ*) = |〈*x*|*ψ_{γₜ}*〉|². This comprises measuring repeatedly, on the quantum computation component 120, the one quantum state |*ψ*_{γ*ₜ*}〉, and adding for each measured state |*x_{γₜ,m}*〉 a classical solution *x_{γₜ,m}* to the set of selected states 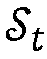 until the *N_{M}* states have been measured and added to the set ${S}_{t} = {\left\{{x}_{{γ}_{t} , m}\right\}}_{m = 1}^{{N}_{M}}$*.*

Alternatively, in an embodiment, the basis-state selection method, which extracts *N_{M}* basis states from the quantum state |*ψ_{γₜ}*〉 at iteration *t*, is performed by the quantum computation component 120 by estimating a full state tomography. This comprises estimating an spectral weight ξ*_{γt}*,*m* with which each basis state |*xₘ*〉 contributes to the final state |*ψ_{γₜ}*〉, which is given by the absolute square of the overlap *ξ*_{*γₜ*,m} = |〈*xₘ*|*ψ_{γₜ}*〉|², further selecting *N_{M}* classical solution states that have the largest spectral weights, and then adding them to the set of selected solutions ${S}_{t} = {\left\{{x}_{{γ}_{t} , m}\right\}}_{m = 1}^{{N}_{M}}$.

Alternatively, in another embodiment, any suitable technique can be used by the quantum computation component 120 to perform the basis-state selection.

The quantum computation device 120 is further configured to send the set of selected solutions 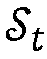 to the classical computation component 110.

Next, the classical computation component 110 is configured to calculate a value of the cost function, a value of each of the one or more equality constraints and/or a value of each of the inequality constraints for each of the *N_{M}* selected classical solutions *x_{γₜ,m}.*

In other words, the classical computation component 110 evaluates the cost function and each of the one or more constraints using each one of the classical solutions *x_{γₜ,m}* in the set ${S}_{t} = {\left\{{x}_{{γ}_{t} , m}\right\}}_{m = 1}^{{N}_{M}}$*,* obtaining the respective value for the cost function *C*(*x_{γₜ,m}*) and the values for each of the equality constraints and/or each of the inequality constraints, *fᵢ*(*x_{γₜ,m}*) and *gⱼ*(*x_{γₜ,m}*) for *i* = 1, *..., N_{Eq}, j* = 1, .. , *N_{InEq}* and *m* = 1, *..., N_{M.}*

Further, the classical computation component 110 is configured to add the calculated values to a set of *N_{M}* evaluated solutions.

Thereafter, the classical computation component 110 is configured to calculate a representative value for the cost function, *C̃*(*γₜ*)*,* and a representative value for each of the one or more constraints, comprising a representative value for each of the one or more equality constraints, ${\left\{{{f}_{i}}^{˜}\left({γ}_{t}\right)\right\}}_{i = 1}^{Eq}$*,* and/or a representative value for each of the one or more equality constraints, ${\left\{{{g}^{˜}}_{j}\left({γ}_{t}\right)\right\}}_{j = 1}^{InEq}$, for the quantum state of the PQC with parameters *γₜ* based on the respective calculated values in the set of evaluated solutions. This condenses the information of many solutions to few representative values, as expressed in Equation (11): $\begin{matrix}{\left\{C\left({x}_{{γ}_{t} , m}\right),{\left\{{f}_{i}\left({x}_{{γ}_{t} , m}\right)\right\}}_{i = 1}^{{N}_{Eq}},{\left\{{g}_{j}\left({x}_{{γ}_{t} , m}\right)\right\}}_{j = 1}^{{N}_{InEq}}\right\}}_{m = 1}^{{N}_{M}} \\ ⇒ {C}^{˜} \left({γ}_{t}\right) , {\left\{{{f}^{˜}}_{i}\left({γ}_{t}\right)\right\}}_{i = 1}^{{N}_{Eq}} , {\left\{{{g}^{˜}}_{j}\left({γ}_{t}\right)\right\}}_{j = 1}^{{N}_{InEq}} .\end{matrix}$ (11)

The classical computation component 110 is further configured to feed back the one or more representative values for the cost function and for the one or more constraints to the classical optimization algorithm.

In an embodiment, calculating the representative value for the cost function *C̃*(*γₜ*) and the representative values for each of the one or more constraints, *f̃ᵢ*(*γₜ*) and/or *g̃ⱼ*(*γₜ*)*,* based on the respective calculated values in the set of evaluated solutions comprises taking the set of *N_{M}* classical solutions 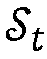 , finding the one solution that occurs most frequently, as given in Equation (12): ${x}_{{γ}_{t}}^{∗} = {argmax}_{{x}_{{γ}_{t} , m}} \left({\sum }_{n = 1}^{{N}_{M}} {δ}_{{x}_{{γ}_{t} , m} ; {x}_{{γ}_{t} , n}}\right) for {x}_{{γ}_{t} , m} , {x}_{{γ}_{t} , n} ∈ {S}_{t}$ (12) where *δ*_{*a*;*b*} is the Kronecker delta, and using this solution to arrive at representative values for the cost function and the constraint functions for the PQC at iteration *t* by taking, from the set of evaluated solutions, the value of the cost function and the value of each of the one or more constraints corresponding to ${x}_{{γ}_{t}}^{∗}$ as the respective representative values.

The representative values for the cost function, for each of the one or more equality constraint functions and for each of the one or more inequality constraint functions for the PQC at iteration t are given in Equations (13) to (15) respectively: ${C}^{˜} \left({γ}_{t}\right) = C \left({x}_{{γ}_{t}}^{∗}\right)$ (13) ${{f}^{˜}}_{i} \left({γ}_{t}\right) = {f}_{i} \left({x}_{{γ}_{t}}^{∗}\right) ∀ i = 1 , … , {N}_{Eq}$ (14) ${{g}^{˜}}_{j} \left({γ}_{t}\right) = {g}_{j} \left({x}_{{γ}_{t}}^{∗}\right) ∀ j = 1 , … , {N}_{InEq}$ (15)

Alternatively, in an embodiment, calculating the representative value for the cost function *C̃*(*γₜ*) and the representative values for each of the one or more constraints, *f̃ᵢ*(*γₜ*) and/or *g̃ⱼ*(*γₜ*), based on the respective calculated values in the set of evaluated solutions comprises taking the set 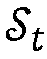 of *N_{M}* classical solutions and calculating a weighted average for the cost function, given in Equation (16), ${C}^{˜} \left({γ}_{t}\right) = \frac{1}{{N}_{M}} {\sum }_{m = 1}^{{N}_{{}_{M}}} C \left({x}_{{γ}_{t} , m}\right) ,$ (16) and calculating a weighted average over a magnitude of one or more equality violation functions and/or one or more inequality violating functions as described below.

Each violation function comprises a function that violates a respective constraint, that is, a solution *x* violates the equality constraint *i* if *fᵢ*(*x*) ≠ 0, and the solution *x* violates the inequality constraint *j* if *gⱼ*(*x*) *>* 0.

The weighted average over the magnitude of each of the one or more equality violation functions and the weighted average over the magnitude of each of the one or more inequality violating functions are given in Equations (17) and (18) respectively: ${{f}^{˜}}_{i} \left({γ}_{t}\right) = \frac{1}{{N}_{M}} {\sum }_{m = 1}^{{N}_{M}} {\left|{f}_{i}\left({x}_{{γ}_{t} , m}\right)\right|}^{η} ∀ i = 1 , … , {N}_{Eq} ,$ (17) ${{g}^{˜}}_{j} \left({γ}_{t}\right) = \frac{1}{{N}_{M}} {\sum }_{m = 1}^{{N}_{M}} max {\left(0,{g}_{j}\left({x}_{{γ}_{t} , m}\right)\right)}^{η} ∀ j = 1 , … , {N}_{InEq} ,$ (18) where *η* > 0 is a parameter that determines the relative weighting of the constraint violations.

In an embodiment, calculating the representative value for the cost function and the representative value for each of the one or more constraints for the quantum state of the PQC with parameters *γₜ* further comprises performing, by the classical computation component 110, a penalty function method.

The penalty function method comprises calculating a total penalized representative cost function value *C̃ₜₒₜₐₗ*(*γₜ*) based on the representative value for the cost function and based on a weighted sum of the one or more representative values of the equality violation functions and/or a weighted sum of the one or more representative values of the inequality violation functions, given in Equation (19): ${{C}^{˜}}_{total} \left({γ}_{t}\right) = {C}^{˜} \left({γ}_{t}\right) + {\sum }_{i = 1}^{{N}_{Eq}} {λ}_{i} ⋅ {\left({{f}^{˜}}_{i}\left({γ}_{t}\right)\right)}^{2} + {\sum }_{j = 1}^{{N}_{InEq}} {ρ}_{j} ⋅ max {\left(0,{{g}^{˜}}_{j}\left({γ}_{t}\right)\right)}^{2} ,$ (19) where *λᵢ* and *ρⱼ* with $0 < {λ}_{i} ∈ ℝ$ and $0 < {ρ}_{j} ∈ ℝ$ are respective penalty factors. Each of the one or more penalty factors are set by the penalty function method used in the classical optimization algorithm.

Thereby, the hybrid quantum-classical computer system 100 and the method according to this invention can efficiently handle constraints linear or non-linear optimization problems with non-linear equality and inequality constraints, such as a constrained optimization by linear approximation (COBYLA), evolutionary strategies (ES), particle-swarm optimization (PSO), or the penalty-based method above.

Next, the classical computation component 110 is configured to update an internal state of the classical optimization algorithm using the one or more representative values.

Further, the classical computation component 110 is configured to update an archive A based on the set of parameters *γₜ,* the set of classical solutions 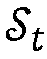 *,* and the corresponding representative values of the cost function and of the one or more constraints. Updating the archive 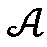 based on the set of parameters *γₜ,* the set of classical solutions 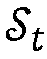 *,* and the corresponding representative values of the cost function and of the one or more constraints comprises adding to the archive 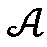 *,* after each iteration *t* is completed, one or more of: the set of parameters *γₜ* used in the iteration *t,* the set of *N_{M}* classical solutions 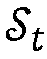 *,* the set of evaluated solutions, the representative values of the cost function, and the representative values of the one or more equality constraints and/or of the one or more inequality constraints.

Thereafter, the classical computation component 110 is configured to determine or check whether a stop criterion for the iterative procedure is met. If the stop criterion is not met, both the classical computation component 110 and the quantum computation component 120 are configured to perform a next iteration, *t* → *t +* 1 and to repeat the steps explained above.

If the stop criterion is met, the iterative procedure is terminated and the classical computation component 110 is further configured to obtain the one or more optimal solutions *xₒₚₜ* 111 after the last iteration have been completed by selecting the one or more classical solutions *x_{γₜ,m}* that correspond to an optimal or near to optimal value of the cost function, or of the representative value of the cost function, calculated in the iterative procedure and that therefore fulfill the one or more constraints.

Selecting the one or more classical solutions *x*_{*γₜ*,m} corresponding to an optimal or near to optimal value of the cost function or of the representative value of the cost function, may comprise choosing from the archive 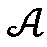 one or more solutions that have a corresponding value of the evaluated cost function and/or a corresponding representative value of the cost function that optimizes the classical constraint linear or non-linear optimization problem.

Then, the classical computation component 110 may provide the one or more optimal solutions *xₒₚₜ* 111 as a final result.

The final result provided by the classical computation component 110 may further comprise (not shown in Fig. 1) one or more of: an optimal set of parameters *γ_{t, opt},* the optimal value of the cost function or an optimal representative value of the cost function, the one or more values or representative values of the constraints corresponding to the optimal value of the cost function.

The optimal set of parameters *γ_{t, opt}* may comprise the set of parameters *γₜ* corresponding to the one or more optimal solutions *xₒₚₜ* 111.

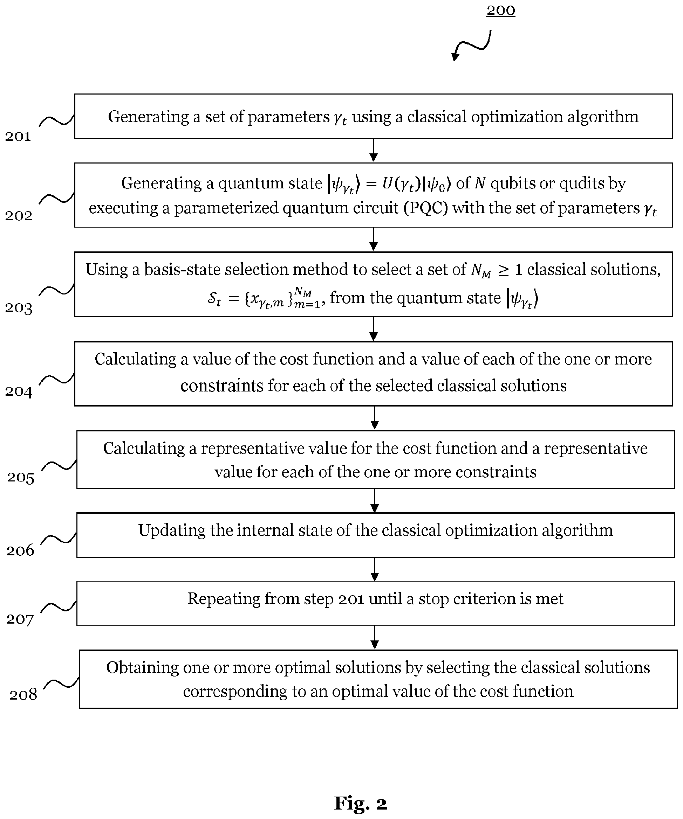

Fig. 2 shows a schematic view of a flowchart for a method 200 for obtaining one or more optimal solutions *xₒₚₜ* to a given classical constraint linear or non-linear optimization problem, where each solution is specified and identified by a set of parameters *γ_{t, opt},* where the one or more optimal solutions provide optimal values of a cost function *C*(*x*), the cost function *C*(*x*) being a linear or non-linear function of one or more decision variables *x*, and where the one or more optimal solutions fulfill one or more constraints, the one or more constraints comprising a set of one or more equality constraints *fᵢ*(*x*) = 0 with *i* = 1, ... , *N_{Eq}* and/or a set of one or more inequality constraints *gᵢ*(*x*) ≤ 0 with *j* = 1, .. , *N_{InEg},* where each equality constraint and each inequality constraint comprises a non-linear complex functional form, according to the invention. The method 200 is performed by a hybrid quantum-classical computer system, for example the hybrid quantum-classical computer system 1 of Fig. 1. the hybrid quantum-classical computer system 1 of Fig. 1.

The method 200 comprises performing an iterative procedure, where each iteration t comprises a step 201 of generating a set of parameters *γₜ* on a classical computation component 110 using a classical optimization algorithm, and sending the set of parameters *γₜ* to a quantum computation component 120.

Then, the iterative procedure comprises a step 202 of generating, on the quantum computation component 120, a quantum state |*ψ_{γₜ}*〉 = *U*(*γₜ*)|*ψ*₀〉 of a plurality of *N* qubits or qudits by executing a PQC with the set of parameters *γₜ,* where the one quantum state |*ψ_{γₜ}*〉 represents a set of *N_{S}* different classical solutions of the classical constraint linear or non-linear optimization problem by means of a quantum superposition in the quantum state, as explained above according to the embodiments of the hybrid quantum-classical computer system 100.

Next, a step 203 of using, on the quantum computation component 120, a basis-state selection method to select a set of *N_{M}* ≥ 1 classical solutions, ${S}_{t} = {\left\{{x}_{{γ}_{t} , m}\right\}}_{m = 1}^{{N}_{M}}$*,* from the one quantum state |*ψ_{γₜ}*〉, and sending the selected set 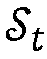 to the classical computation component 110, is comprised. Further, in a step 204, the classical computation component 110 calculates a value of the cost function and a value of each of the one or more constraints for each of the *N_{M}* selected classical solution *x*_{*γₜ*,*m*}, and adds the calculated values to a set of evaluated solutions.

The iterative procedure further comprises a step 205 of calculating, on the classical computation component 110, a representative value for the cost function and a representative value for each of the one or more constraints for the quantum state of the PQC with parameters *γₜ* based on the respective calculated values in the set of evaluated solutions, and feeding back the one or more representative values to the classical optimization algorithm.

Next, a step 206 of updating, in the classical computation component 110, an internal state of the classical optimization algorithm using the one or more representative values is comprised. Further, the iterative procedure comprises a step 207 of repeating the iterative procedure from step 201 onwards, until a stopping criterion is fulfilled.

Thereafter, the method 200 comprises a step 208 of obtaining the one or more optimal solutions *xₒₚₜ* 111 after the latest iteration have been completed by selecting the one or more classical solutions *x_{γₜ,m}* corresponding to an optimal or near to optimal value of the cost function, or of the representative value of the cost function, calculated in the iterative procedure and that fulfill the one or more constraints.

The method 200 further comprises, updating on the classical computation component 110 an archive 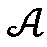 based on the set of parameters *γₜ,* the set of classical solutions 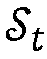 *,* and the corresponding representative values of the cost function and of the one or more constraints.

The method 200 is characterized in that the PQC implements the unitary quantum operator *U*(*γ*) that acts on the plurality of *N* qubits or qudits, where unitary quantum operator *U*(*γ*) is composed of *N_{L}* layers with different choosable sets of parameters $γ = {\left\{{γ}_{l}\right\}}_{l = 1}^{{N}_{L}}$ *,* as explained above according to the embodiments of the hybrid quantum-classical computer system 100. The details are not repeated again here.

The method 200 is further characterized in that the surrogate phase operators *P_{surrogate}, ₗ*(*γ_{l,P}*) in each layer of the PQC act on the plurality of *N* qubits or qudits, and are implemented with one or more single-qubit angular momentum operators or single-qudit angular momentum operators, as explained above according to the embodiments of the hybrid quantum-classical computer system 100. The details are not repeated again.

In an embodiment of the method 200, the basis-state selection method is performed by sampling from the quantum state |*ψ_{γₜ}*〉, comprising measuring repeatedly the one quantum state |*ψ_{γₜ}*〉, and adding for each measured state |*x_{γₜ,m}*〉 a classical solution *x_{γₜ,m}* corresponding to the set of selected states 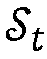 until *N_{M}* states have been measured and added to the set of selected states 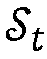 *.*

In another embodiment of the method 200, the basis-state selection method is performed by full state tomography from the quantum state |*ψ_{γₜ}*〉 where a set of weights of each basis state is determined, and the basis states corresponding to a subset of the *N_{M}* largest weights is selected and added to the set of selected states, ${S}_{t} = {\left\{{x}_{{γ}_{t} , m}\right\}}_{m = 1}^{{N}_{M}}$*.*

In an embodiment, the step of calculating 205 the representative value for the cost function and the representative value for each of the one or more constraints for the quantum state of the PQC with parameters *γₜ* based on the respective calculated values in the set of evaluated solutions comprises taking the set 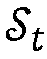 of *N_{M}* classical solutions and determining a solution that occurs most frequently ${x}_{{γ}_{t}}^{∗}$*,* as explained above for the different embodiments of the hybrid quantum-classical computer system 100, and further taking the value of the cost function and the value of the one or more constraints corresponding to the solution that occurs most frequently ${x}_{{γ}_{t}}^{∗}$ as the respective representative values

Alternatively, in another embodiment, the step of calculating 205 the representative value for the cost function and the representative value for each of the one or more constraints for the quantum state of the PQC with parameters *γₜ* based on the respective calculated values in the set of evaluated solutions comprises taking the set 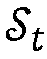 of *N_{M}* classical solutions and calculating a weighted average for the cost function and a weighted average over a magnitude of one or more equality violation functions and/or one or more inequality violating functions, where each violation function comprises a function that violates a respective constraint.

In an embodiment, the step of calculating 205 the representative value for the cost function and the representative value for each of the one or more constraints for the quantum state of the PQC with parameters *γₜ* based on the respective calculated values in the set of evaluated solutions comprises calculating a total penalized representative cost function value based on the representative value for the cost function and based on a weighted sum of the one or more representative values of the equality violation functions and/or a weighted sum of the one or more representative values of the inequality violation functions, where each weighted sum comprises a respective penalty factor, each penalty factor being a real and positive, and where each penalty factor is set by the penalty function method on the classical optimization algorithm. The details regarding the total penalized representative cost function value, the weighted sum of the one or more representative values of the equality violation functions, and the weighted sum of the one or more representative values of the inequality violation functions were explained above for the embodiment of the hybrid quantum-classical computer system 100.

The method 200 further comprises actions according to the described aforementioned embodiments of the hybrid quantum-classical computer system 100. Details are not repeated again. Hence, the method 200 achieves the same advantages as the hybrid quantum-classical computer system 100.

*Hereinafter, the invention will be described for two different implementation examples, which are typical for constrained linear or non-linear optimization problems.*

The first example concerns to the operation of a fleet of electric vehicles (EVs), which constitutes an archetypical optimization problem with several challenges. The central aspect of this operation is to provide a service to the customer such that for all vehicles, the requests of the customers can be fulfilled whilst reducing the electricity cost for charging all EVs as much as possible.

In one formulation of the problem, the target is to find the optimal charging schedule of the fleet of *N_{EV}* EVs over *N_{T}* time slots. The search variable *x* defines a charging schedule of the complete EV fleet. A schedule consists of *N_{Ev} · N_{T}* discrete integer variables given in Equation (20), $x = \left({l}_{1 , 1}, {l}_{2 , 1}, …, {l}_{n , 1}, {l}_{1 , 2}, …, {l}_{n , s}, …, {l}_{{N}_{EV} , {N}_{T}}\right) ,$ (20) where each integer variable can have only one of d values, ℓ*_{n,s}* ∈ [0,1, ... , *d* - 1]. The value of each integer *ℓ_{n,s}* determines a charging power level of vehicle n in time slot *s*, and where each of the charging levels amounts to charging with a physical electrical power *p*_{ℓ} with *p*₁ < *p*₂ < ... < *p_{d}*, where the values *p*_{ℓ} are fixed but arbitrary.

The actual power levels *p*_{ℓ} range from negative values, which corresponds to discharging the EV and selling the corresponding electricity to the grid, to positive values, which implies charging the EV and buying the electricity from the grid.

The overall target is the minimization of the cost for the electricity which is expressed by the objective function or cost function given in Equation (21): $C \left(x\right) = {\sum }_{s = 1}^{{N}_{T}} {\sum }_{n = 1}^{{N}_{EV}} P \left(s,p\left({l}_{n , s}\right)\right) p \left({l}_{n , s}\right) + {P}_{0} ⋅ {max}_{s} {\sum }_{n = 1}^{{N}_{EV}} p \left({l}_{n , s}\right)$ (21)

The first term of Eq. (21) represents an electricity cost for the complete charging schedule and the function 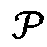 (*s, p*) gives the price for buying (or selling) energy from (to) the grid at time slot *s* with charging power *p*. The function *p*(ℓ*_{n,s}*) maps the integers specifying the charging level ℓ*_{n,s}* to the actual charging power *p*_{ℓ}, and is given as an arbitrary and usually non-linear function, which receives the integer for the charging level ℓ*_{n,s}* as input and returns the corresponding charging power, *p*_{ℓ} = *p*(ℓ*_{n,s}*) as output. The second term represents a peak charging power over the complete schedule at any time, which typically has a big contribution to the total electricity cost for company facilities and, thus, should be minimized. Here, 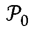 is a cost parameter that specifies the actual cost of the peak charging power, and that is given as part of the problem setup.

The customer needs are reflected in a constraint that the state of charge (SOC) of the battery of each EV after the charging, i.e. in time slot *N_{T},* is at least the minimum required by the user, *E_{n,min},* as indicated in Equation (22): ${E}_{n , {N}_{T}} \geq {E}_{n , min}$ (22) where the SOC at time slot s is given by Equation (23): ${E}_{n , s} = {E}_{n , 0} + {\sum }_{r = 1}^{s} p \left({l}_{n , r}\right)$ (23)

In addition, there are technical constraints to be fulfilled as well. For one, a total charging power in each time slot must be within predefined bounds in order to not trigger any fuses, as given in Equations (24) and (25): ${\sum }_{n = 1}^{{N}_{EV}} p \left({l}_{n , s}\right) \leq {p}_{max} ∀ s ,$ (24) ${\sum }_{n = 1}^{{N}_{EV}} p \left({l}_{n , s}\right) \geq {p}_{min} ∀ s ,$ (25) where *pₘₐₓ* > 0 and *pₘᵢₙ* < 0 are the fuse limits, i.e. the maximal and minimal charging powers allowed in the electric circuits respectively, and the battery SOC of each vehicle at every time slot s cannot be outside predefined bounds given in Equation (26) and Equation (27): ${E}_{n , s} \leq {E}_{n , max} ∀ n , s$ (26) ${E}_{n , s} \geq {E}_{n , min} ∀ n , s$ (27) where *E_{n,max}* is a maximum value for the battery SOC of a vehicle *n.*

The problem described so far cannot be handled in its generality with current state of the art variational approaches utilizing parametrized quantum circuits coupled to a classical optimization component. First, the non-linearity of the cost function is not expressible efficiently in terms of the elementary operators of the quantum computation component (i.e., quantum hardware). Typically, a cost Hamiltonian would be expanded into elementary (unitary) operators and a subsequent Trotterization of the unitary operators in the quantum circuit is necessary. This leads to a very deep circuit that is not feasible on near to mid-term quantum devices. Additionally, the large numbers of inequality constraints, see for example Eq. (22) and Eqs. (24) to (26), cannot be efficiently incorporated into the state-of-the-art approaches.

The proposed invention enables the treatment of such problems by replacing the cost Hamiltonian typically used in a PQC by a highly parametrizable surrogate Hamiltonian which can be realized in hardware efficiently. Also it allows for the treatment of the many constraints efficiently without increasing the size of the problem or, for example, without adding interaction terms to the phase Hamiltonian.

In the exemplary EV charging problem, the encoding into the quantum formulation is as follows: Each qudit of the quantum computation component 120 is set up to have *d* local quantum states, i.e. *d* local levels and each of these local states represents one charging power level ℓ*_{n,s}* ∈ [0, ..., *d* - 1] of one EV *n* ∈ [1, ..., *N_{EV}*] in one time slot *s* ∈ [1, ..., *N_{T}*]*.* The basis states are exemplary given by Equation (28) as: $\left|x\right〉 = \left|{l}_{1 , 1},{l}_{2 , 1},…,{l}_{n , 1},{l}_{1 , 2},…,{l}_{n , s},…,{l}_{{N}_{EV} , {N}_{T}}\right〉$ (28) which represent all the different possibilities for the charging schedule of the whole EV fleet. Further, this encoding implies that all possible solutions to the EV charging problem are represented by the measurement basis states of the quantum circuit.

One advantage of using a quantum computation component 120 for approaching this problem is given by the fact that a general quantum state in this basis is naturally a superposition of all possible solutions to the problem, i.e., |*ϕ*〉 = Σ*ₓ cₓ* |*x*〉, with complex coefficients ${c}_{x} ∈ ℂ$ where Σ*ₓ*|*cₓ*|² = 1.

The quantum computation component 120 that executes the PQC, prepares the state given for example in Equation (29), $\left.\left|ψ\right.\right〉 = {\sum }_{l = 1}^{{N}_{L}} {U}_{l} \left({γ}^{l}, {a}^{l}, {b}^{l}\right) \left.\left|{ψ}_{0}\right.\right〉 ,$ (29) where the initial state |*ψ*₀〉 is given, for example, by an equal superposition of all possible basis states, see Equation (30): $\left|{ψ}_{0}\right〉 = \frac{1}{\sqrt{{D}_{H}}} {\sum }_{x} \left|x\right〉 ,$ (30) where *D_{H}* = *d^{N^{EV} N^{T}}* is a dimensionality of the Hilbert space for *N_{EV}* EVs and *N_{T}* time slots, and where each time slot can be in one of d charging levels, encoded by *N_{EV} · N_{T}* qudits where each qudit has *d* quantum states, i.e., each qudit has local dimensionality *d*.

In this example, the unitary in each layer *l* has the form given in Equation (31): ${U}_{l} \left({γ}_{l}, {a}_{l}, {b}_{l}\right) = {e}^{- i {M}_{l} \left({γ}_{l}\right)} {e}^{- i {P}_{surrogate} \left({a}_{l}, {b}_{l}\right)} ,$ (31) where the phase unitary in each layer is generated by the surrogate phase operator, *P_{surrogate}*(*aₗ, bₗ*)*,* which comprises freely tunable parameters $\left({a}_{l}, {b}_{l}\right) = \left\{{a}_{n , s}^{l}, {b}_{n , k , s , r}^{l}\right\}$*.*

The surrogate phase operator is formulated with the z-component of the angular momentum operators of each qudit, as for example in Equation (32): ${P}_{surrogate} \left(\left\{{a}_{n , s}, {b}_{n , k , s , r}\right\}\right) = {\sum }_{s = 1}^{{N}_{T}} {\sum }_{n = 1}^{{N}_{EV}} {a}_{n , s} {L}_{z ; n , s} + {\sum }_{s , r , n , k} {b}_{n , k , s , r} {L}_{z ; n , s} {L}_{z ; k , r} ,$ (32) where the choosable parameters are all real, ${a}_{n , s} , {b}_{n , k , s , r} ∈ ℝ$ and the parameters *b_{n,k,s,r}* act as two-body interaction terms that need to be symmetric, i.e., *b_{n,k,s,r}* = *b_{k,n,r,s}.*

The mixing unitaries in each layer, ~ *e ^{-i Ml}*(*γ^{l}*), are generated by freely parametrizable mixing operators, *Mₗ*(*γₗ*)*,* which may comprise any form that can be efficiently implementable on the quantum computation component 120 and must only fulfil a requirement that they do not commute with the phase operators, i.e., [*Mₗ, P_{surrogate}*] ≠ 0, ∀ *l* for the general parameter sets (*γₗ, aₗ, bₗ*)*.* Thus, the mixing operators generate transitions between the measurement basis states, *Mₗ*|*xₛ*〉 = *Eⱼ m_{l,sj}*|*xⱼ*〉*.*

In this exemplary implementation, the mixing operators may be given by a sum over all *x-*angular momentum operators of each qudit variable, as exemplary given in Equation (33): ${M}_{l} \left({γ}_{l}\right) = {\sum }_{s = 1}^{{N}_{T}} {\sum }_{n = 1}^{{N}_{EV}} {γ}_{l ; n , s} {L}_{x ; n , s} .$ (33)

In a simple but representative case, the quantum circuit has only one layer, *N_{L}* = 1, and a solution which is encoded by the quantum state of the PQC is extracted from the quantum circuit by drawing from a probability distribution of Equation (34): ${x}_{t} ∼ P \left(x, \left\{{γ}_{n , s}, {a}_{n , s}, {b}_{k , n , s , r}\right\}\right)$ (34) which is given by the quantum state, as shown in Equation (35): $\left(x, \left\{{γ}_{n , s}, {a}_{n , s}, {b}_{k , n , s , r}\right\}\right) = {\left|\left〈x\right|{e}^{- i {\sum }_{s , n} {γ}_{n , s} {L}_{x ; n , s}}{e}^{- i {\sum }_{s , n} {a}_{n , s} {L}_{z ; n , s} - i {\sum }_{s , r , k , n} {b}_{k , n , s , r} {L}_{z ; k , r} {L}_{z ; n , s}}\left|{ψ}_{0}\right〉\right|}^{2} ,$ (35) and may comprise the parameter sets *γ* = {*γ_{n,s}, a_{n,s}, b_{k,n,s,r}*} as free parameters.

The method executed on the claimed hybrid quantum-classical computer system 100 according to this invention, comprises the following steps. A classical optimization algorithm such as a stochastic gradient descent (SGD) is initiated on the classical computation component 110.

The search parameters of this classical optimizer are given by the parameters for the PQC, i.e., $γ = \left\{{γ}_{n , s}, {a}_{n , s}, {b}_{k , n , s , r}\right\} ∈ {ℝ}^{{N}_{D}}$*.* A number of parameters, i.e., the search dimension, *N_{D},* is given by the number of electric vehicles, *N_{EV},* the number of charging slots, *N_{T},* and the number of layers in the PQC, *N_{L},* as ${N}_{D} = {N}_{L} \left(2 {N}_{T}{N}_{EV}+\frac{1}{2}{\left({N}_{T}{E}_{EV}\right)}^{2}\right)$*.*

Additionally, an archive 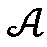 may be initiated on the classical computation component 110 where search parameters, possible classical solutions and corresponding values of the cost function can be stored.

Further, the quantum computation component 120 may be configured such that the measurement basis represents classical solutions, exemplary as in Eq. (28).

Then, an iteration counter is initialized with *t* = 0 and the following steps are iterated:
i) Based on its internal state, the classical optimization algorithm generates a set of parameter values *γ* = {*γ_{n,s}, aₙ,ₛ, b_{k,n,s,r}*} and the classical computation component 110 sends these parameter values to the quantum computation component 120.
ii) The quantum computation component 120 receives the parameter set *γ* = {*γ_{n,s}, a_{n,s}, b_{k,n,s,r}*} and adjusts the unitary gate operators according to Eq. (31), where the phase and mixing operators are given by Eqs. (32) and (33), respectively.
iii) The quantum computation component 120 executes the PQC by applying the unitary operator on the initial state as specified in Eq. (29), thereby preparing the quantum state |*ψ*({*γ_{n,s}, a_{n,s}, b_{k,n,s,r}*})〉*.*
iv) The resulting quantum state |*ψ*({*γ_{n,s}, a_{n,s}, b_{k,n,s,r}*})〉 may be then measured on the quantum computation component 120 and thereby projected onto the measurement basis, as given in Equation (36): $\left|ψ\left(\left\{{γ}_{n , s}, {a}_{n , s}, {b}_{k , n , s , r}\right\}\right)\right〉 {⇒}^{measurement} \left|{x}_{γ , m}\right〉$ (36) where the one measurement, i.e., *N_{M}* = 1, amounts to choosing the basis state according to the standard Born-rule probability, see Equation (37), $\left|{x}_{γ , m}\right〉 ∼ P \left(x, \left\{\left\{{γ}_{n , s}, {a}_{n , s}, {b}_{k , n , s , r}\right\}\right\}\right) = {\left|\left〈\left.x\right|ψ\left(\left\{{γ}_{n , s}, {a}_{n , s}, {b}_{k , n , s , r}\right\}\right)\right〉\right|}^{2}$ (37) and where reading out the basis states directly corresponds to the selection of the classical solution, see Equation (38): ${x}_{γ , m} = \left({l}_{1 , 1},{l}_{2 , 1},…,{l}_{n , 1},{l}_{1 , 2},…,{l}_{n , s},…,{l}_{{N}_{EV} , {N}_{T}}\right) = \left\{{l}_{n , s}\right\}$ (38)
v) Then, the classical cost of Eq. (21) and all the constraint functions of Eq. (22) and Eqs. (24) to (26) are evaluated for this classical solution, see Equations (39) to (44): $C \left({x}_{γ , m}\right)$ (39) ${g}_{1 , n} \left({x}_{γ , m}\right) = {E}_{n , min} - {E}_{n , {N}_{T}} \left({x}_{γ , m}\right) ∀ n$ (40) ${g}_{2 , s} \left({x}_{γ , m}\right) = {\sum }_{n = 1}^{{N}_{EV}} p \left({l}_{n , s}\right) - {p}_{max} ∀ s$ (41) ${g}_{3 , s} \left({x}_{γ , m}\right) = {p}_{min} - {\sum }_{n = 1}^{{N}_{EV}} p \left({l}_{n , s}\right) ∀ s$ (42) ${g}_{4 , n , s} \left({x}_{γ , m}\right) = {E}_{n , s} \left({x}_{γ , m}\right) - {E}_{n , max} ∀ n , s$ (43) ${g}_{5 , n , s} \left({x}_{γ , m}\right) = {E}_{n , min} - {E}_{n , s} \left({x}_{γ , m}\right) ∀ n , s$ (44) and the battery SOC of the EV *n* at time slot s given by Eq. (23) takes the form of Equation (45): ${E}_{n , s} \left({x}_{γ , m}\right) = {E}_{n , 0} + {\sum }_{r = 1}^{s} p \left({l}_{n , r}\right)$ (45)
vi) In this exemplary implementation, the cost function value and the constraint function values, Eqs. (39) to (44), are used to calculate the representative value for the cost function and the representative value for each of the constraint functions by taking the values from this one measurement, given in Equations (46) to (51): ${C}^{˜} \left(γ\right) = C \left({x}_{γ , m}\right)$ (46) ${{g}^{˜}}_{1 , n} \left(γ\right) = {g}_{1 , n} \left({x}_{γ , m}\right) ∀ n$ (47) ${{g}^{˜}}_{2 , s} \left(γ\right) = {g}_{2 , s} \left({x}_{γ , m}\right) ∀ s$ (48) ${{g}^{˜}}_{3 , s} \left(γ\right) = {g}_{3 , s} \left({x}_{γ , m}\right) ∀ s$ (49) ${{g}^{˜}}_{4 , n , s} \left(γ\right) = {g}_{4 , n , s} \left({x}_{γ , m}\right) ∀ n , s$ (50) ${{g}^{˜}}_{5 , n , s} \left(γ\right) = {g}_{5 , n , s} \left({x}_{γ , m}\right) ∀ n , s$ (51)
vii) Next, the total penalized cost function is calculated from these representative values and is given in Equation (52): $\begin{matrix}{{C}^{˜}}_{total} \left(γ\right) = {C}^{˜} \left(γ\right) + ρ {\sum }_{n = 1}^{{N}_{EV}} max {\left(0,{{g}^{˜}}_{1 , n}\left(γ\right)\right)}^{2} + ρ {\sum }_{s = 1}^{{N}_{T}} {\sum }_{j = 2 , 3} max {\left(0,{{g}^{˜}}_{j , s}\left(γ\right)\right)}^{2} \\ + ρ {\sum }_{s = 1}^{{N}_{T}} {\sum }_{n = 1}^{{N}_{EV}} {\sum }_{j = 4 , 5} max {\left(0,{{g}^{˜}}_{j , n , s}\left(γ\right)\right)}^{2} ,\end{matrix}$ (52) where max (0, *g̃*_{1,*n*}(γ))², max (0, *g̃*_{*j*,*s*}(γ))² and max (0, *g̃_{j,n,s}*(γ))² are the penalty terms which ensure the fulfillment of the inequality constraints *g̃*_{1,n} ≤ 0, *g̃_{j,s}* ≤ 0, and *g̃_{j,n,s}* ≤ 0 upon minimizing the total penalized cost function, and where *ρ* is the penalty factor. The penalty factor *ρ* is large and positive, for example *ρ* = 100 is used in this example.
viii) Then, the total penalized representative value of the cost function, *C̃ₜₒₜₐₗ*(*γ*)*,* the representative values of the constraint functions *g̃*(*γ*) = {*g̃*_{1,*n*}(*γ*)*, g̃_{j,s}*(*γ*)*, g̃_{j,n,s}*(*γ*)}*,* the corresponding measured solution, i.e. the schedule *x_{γ,m}*, and the parameters used by the PQC in the current iteration, *γ* = {*γ_{n,s}, a_{n,s}, b_{k,n,s,r}*}*,* are added to the archive, 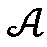 → 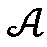 *+* (*C̃ₜₒₜₐₗ*(*γ*), *g̃*(*γ*), *γ, C*(*x_{γ,m}*)*,x_{γ,m}*)*.*
ix) The total penalized representative value for the cost function, *C̃ₜₒₜₐₗ*(*γ*)*,* and the representative values of the constraint functions *g̃*(*γ*) are fed back into the classical optimization algorithm. Based on the current and all previous values (i.e., values calculated in the previous iterations) of the cost function and their corresponding parameters values, the classical optimizer updates its internal state.
x) Thereafter, a convergence criterion is checked on the classical computation component 110. This can be, for example, whether a maximally allowed number of cost function evaluations has been reached. If the convergence criterion is met, the iterative procedure is stopped and the schedule with the best value for the cost function is selected from the archive 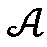 and returned as the final solution. If the convergence criterion is not met, the process is repeated for a next iteration from step i) above.

After running the claimed method on the claimed hybrid quantum-classical computer system, the final result is extracted from the archive 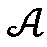 and the charging schedule with the lowest or best possible value for the electricity cost, which fulfills the given constraint as best as possible, is obtained as the optimal solution *xₒₚₜ.*

The PQC used in this invention is effective in producing good solutions, since it uses a surrogate phase operator that is efficiently implementable on current quantum hardware and which is still flexible enough to generate quantum states where multiple solutions are in a linear superposition but can be assigned varying amplitudes. This allows the implementation of the process of identifying representative values for the classical cost and constraint functions, where a classical optimizer can then adjust the parameters of the PQC to single out the best or close to best solutions which also fulfill the constraints, as best as possible.

The second application example regards a Markowitz portfolio optimization. The target of Markowitz portfolio optimization is to manage a portfolio of financial assets over a period of time such that an expected return is maximized, while at the same time an expected risk is minimized (see e.g., "Solving the Optimal Trading Trajectory Problem Using a Quantum Annealer", IEEE Journal of Selected Topics in Signal Processing 10(6), 1053-1060, (2016) doi: 10.1109/JSTSP.2016.2574703, "Computational aspects of alternative portfolio selection models in the presence of discrete asset choice constraints", Quantitative finance 1(5), 489-501 (2001), or "Dynamic portfolio optimization with real datasets using quantum processors and quantum-inspired tensor networks" Phys. Rev. Research 4, 013006 (2022) for recent introductions).

Technically, the problem consists of determining the compositions of a portfolio of financial assets as specified by the variables $x = {\left\{{ω}_{n , s}\right\}}_{n = 1 , s = 1}^{{N}_{A sset} , {N}_{T}}$*,* where *ω_{n,s}* is a share of asset *n,* with *n* = 1, ..., *N_{Asset}* at time s with *s* = 1, *..., N_{T}.* Usually rebalancing, i.e., changing the portfolio composition, is done at fixed predefined times that leads to these discretized time steps. Additionally, it is common for funds to trade assets in discrete junks, which leads to the shares *ω*_{*n*,*s*} to be representable by integer variables, i.e. *ω*_{*n*,*s*} ∈ [0, ..., *d* - 1], where $d ∈ {ℕ}^{+}$ specifies a maximally allowed number of discrete chunks of assets to be traded.

The cost function objective of this problem is given by an expected return given in Equation (53) $C \left(x\right) = {\sum }_{s = 1}^{{N}_{T}} {\sum }_{n = 1}^{{N}_{Asset}} \left({μ}_{n , s}{ω}_{n , s}-{ν}_{n , s}\left|{ω}_{n , s + 1}-{ω}_{n , s}\right|\right) ,$ (53) where *µ_{n,s}* is a forecasted return on asset *n* at time s, and *v*_{*n*,*s*} is a transaction cost when changing the share of asset n from time step *s* - 1 to time step *s* in the portfolio.

Equation (53) gives an accumulated overall expected return for the complete portfolio over the considered time horizon where the transaction cost enter as a nonlinear function.

A distribution of assets has to fulfil two types of constraints. The first type of constraints are given by equality constraints, which state that at each time step a total investment is always a same value given by *K,* as expressed in Equation (54): ${f}_{s} \left(x\right) = {\sum }_{n = 1}^{{N}_{Asset}} {ω}_{n , s} - K = 0 ∀ s$ (54)

The second type of constraint is specified as one inequality constraint and assures that a total expected risk is below a given value R, given in Equation (55): $g \left(x\right) = {\sum }_{s = 1}^{{N}_{T}} {\sum }_{n = 1}^{{N}_{Asset}} {ω}_{n , s} {\sum }_{nm , s} {ω}_{m , s} - R \leq 0$ (55)

Here, Σ*_{nm,s}* denotes the covariance of assets *n* and *m* at time *s*. Equation (55) gives a measure for the risk since assets which have a large covariance, i.e., which vary together in a correlated way, reduce the number of independent assets in the portfolio and thus reduce the variability and stability of the whole portfolio.

The constraint portfolio optimization problem is approached with the proposed method and hybrid computer system by representing the integer variables describing the shares in the portfolios, $x = {\left\{{ω}_{n , s}\right\}}_{n = 1 , s = 1}^{{N}_{Asset} , {N}_{T}}$*,* as the measurement basis states of the quantum computation component, as expressed in Equation (56), $\left|x\right〉 = \left|{ω}_{1 , 1},{ω}_{2 , 1},…{ω}_{{N}_{Assets} , 1},{ω}_{1 , 2},…,{ω}_{n , s},…,{ω}_{{N}_{Assets} , {N}_{T}}\right〉$ (56) where each qudit has d quantum levels and each of those levels represents one value of an integer variable describing the shares of the corresponding asset in the portfolio, and formulating the surrogate phase operator in terms of the *z* -angular momentum operator *L*_{*z*;*n,s*} of the qudit encoding the corresponding variable *ω_{n,s},* i.e. by using the association rule ${ω}_{n , s} ↔ {L}_{z ; n , s} + \frac{d - 1}{2}$. The measurement basis states are eigenstates of the *z*-angular momentum operators *L*_{*z*;*n,s*} and the eigenvalues are the shares of the asset in the portfolio, as expressed in Equation (57): $\begin{matrix}\left({L}_{z ; n , s}+\frac{d - 1}{2}\right) \left|{ω}_{1 , 1},{ω}_{2 , 1},…{ω}_{{N}_{Assets} , 1},{ω}_{1 , 2},…,{ω}_{n , s},…,{ω}_{{N}_{Assets} , {N}_{T}}\right〉 \\ = {ω}_{n , s} \left|{ω}_{1 , 1},{ω}_{2 , 1},…{ω}_{{N}_{Assets} , 1},{ω}_{1 , 2},…,{ω}_{n , s},…,{ω}_{{N}_{Assets} , {N}_{T}}\right〉 .\end{matrix}$ (57)

In this example, the quantum computation component 120 which executes the PQC, prepares a state using one layer given in Equation (3), i.e. |*ψ*〉 = *U*(*γ*)|*ψ*₀〉, which acts on the *N* = *N_{Assets} N_{T}* qudits and where the unitary operation *U* is freely parametrizable with a set of parameters *γ*. The initial state of the circuit |*ψ*₀〉 is given by the equal superposition of all possible states of Equation (58): $\left|{ψ}_{0}\right〉 = \frac{1}{\sqrt{{D}_{H}}} {\sum }_{x} \left|x\right〉 ,$ (58) where *D_{H}* = *d^{N^{Assets} N^{T}}* is the dimensionality of the Hilbert space for *N_{Assets}* assets and *N_{T}* time slots, and where the share of each asset can bet between zero and *d* - 1, which are encoded by *N_{Assets} · N_{T}* qudits with local dimension d.

In this example, the unitary operation has the form given in Equation (59): $U \left(γ\right) = {e}^{- i X \left({γ}_{M}\right)} {e}^{- i {P}_{surrogate} \left({γ}_{P}\right)}$ (59) which comprises a mixing term ~ *e*^{*-i X*(*γM*}) and a surrogate phase operator ~ *e^{-i Psurrogate}*(*γ^{P}*).

The mixing unitary comprises freely choosable parameters ${γ}_{M ; n , s} ∈ ℝ$*,* and it is generated by a Hermitian mixing operator, which in this example comprises the sum over all x-angular momentum operators of each qudit, as in Equation (60): $X \left({γ}_{M}\right) = {\sum }_{s = 1}^{{N}_{T}} {\sum }_{n = 1}^{{N}_{Assets}} {γ}_{M ; n , s} {L}_{x ; n , s} ,$ (60) where *L*_{*x*;*n,s*} is the x-component of the angular momentum operator of the qudit encoding a share of asset *n* at time slot *s*. The action of *L*_{*x*;*n,s*} is given by the action of the *x*-angular momentum operators, see Equation (61): $\begin{matrix}{L}_{x ; n , s} \left|{ω}_{1 , 1},…,{ω}_{n , s},…,{ω}_{{N}_{Assets} , {N}_{T}}\right〉 \\ = \frac{1}{2} \sqrt{\left(d-{ω}_{n , s}-2\right) \left({ω}_{n , s}+2\right)} \left|{ω}_{1 , 1},…,{ω}_{n , s},…,{ω}_{{N}_{Assets} , {N}_{T}}\right〉 \\ + \frac{1}{2} \sqrt{\left(d-{ω}_{n , s}\right) {ω}_{n , s}} \left|{ω}_{1 , 1},…,{ω}_{n , s},…,{ω}_{{N}_{Assets} , {N}_{T}}\right〉\end{matrix}$ (61) and as such generates transitions between and creates superpositions of basis states, i.e. different solutions.

The surrogate phase unitary has freely choosable parameters ${γ}_{P ; n , s} ∈ ℝ$ and it is generated by a Hermitian phase operator which in this example comprises the sum over all z-angular momentum operators of each qudit in Equation (62): ${P}_{surrogate} \left({γ}_{P}\right) = {\sum }_{s = 1}^{{N}_{T}} {\sum }_{n = 1}^{{N}_{Assets}} {γ}_{P ; n , s} {L}_{z ; n , s} ,$ (62)

Putting it all together, the quantum circuit prepares the following state given in Equation (63): $\left|ψ\left(\left\{{γ}_{P}, {γ}_{M}\right\}\right)\right〉 = {e}^{- i {\sum }_{s = 1}^{{N}_{T}} {\sum }_{n = 1}^{{N}_{Assets}} {γ}_{M ; n , s} {L}_{x ; n , s}} {e}^{- i {\sum }_{s = 1}^{{N}_{T}} {\sum }_{n = 1}^{{N}_{Assets}} {γ}_{P ; n , s} {L}_{z ; n , s}} \left|{ψ}_{0}\right〉 .$ (63)

This parametrized quantum state depends on *N_{D}* = 2*N_{Asset}N_{T}* parameters $γ = {\left\{{γ}_{M ; n , s}, {γ}_{P ; n , s}\right\}}_{n = 1 , s = 1}^{{N}_{Asset} , {N}_{T}}$ which need to be optimally determined by a classical optimization algorithm.

The proposed method and hybrid quantum-classical computer system execute the following steps. First, a classical optimization algorithm ( 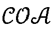 )*,* which can handle constraints such as a COBYLA, is initiated on the classical computation component 110. The search parameters of this classical optimizer are given by the *N_{D}* = 2*N_{Asset}N_{T}* parameters of the PQC, i.e., $γ = {\left\{{γ}_{M ; n , s}, {γ}_{P ; n , s}\right\}}_{n = 1 , s = 1}^{{N}_{Asset} , {N}_{T}} ∈ {ℝ}^{{N}_{D}}$*.*

Additionally, an archive 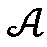 is initiated on the classical computation component 110, where the search parameters, possible (or candidate) solutions and corresponding values of the objective functions can be stored.

Second, the quantum computation component 120 is configured such that the measurement basis represents classical solutions as depicted in Eq. (56) and the quantum circuit produces the parametrized quantum state in Eq. (63) with the corresponding gate operations of Eqs. (59), (60) and (62).

Then, an iteration counter is initialized with *t* = 0 and the following steps are iterated:
i) Based on its internal state, the classical optimizer algorithm generates a set of search parameter values as in Equation (64): $COA \to {γ}_{t} = {\left\{{γ}_{M ; n , s}^{t}, {γ}_{P ; ns}^{t}\right\}}_{n = 1 , s = 1}^{{N}_{Asset} , {N}_{T}} ,$ (64) and the classical computation component 110 sends these parameter values to the quantum computation component 120.
ii) The quantum computation component 120 receives the parameter set *γₜ* and adjusts its unitary gate operators such that it produces the quantum state |*ψ*(*γₜ*)〉 specified by Eq. (63). That is, the quantum computation component 120 executes the quantum circuit and produces that state.
iii) In this example, the basis-state selection method is performed to select a set of classical solutions from the quantum state by measuring the quantum state on the quantum computation component *N_{M}* times and thereby projecting it onto one measurement basis state in each measurement, as expressed in Equation (65): $Repeat \left(\left|ψ\left({γ}_{t}\right)\right〉{⇒}^{measurement}\left|{x}_{{γ}_{t} , m}\right〉\right) for m = 1 , … , {N}_{M} ,$ (65)

For each measurement, a corresponding classical solution *x_{γₜ,m}* is added to the set of selected solutions 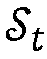 *,* comprising *N_{M}* selected solutions after the measurements are done, i.e. ${S}_{t} = {\left\{{x}_{{γ}_{t} , m}\right\}}_{m = 1}^{{N}_{M}}$*.*

Some of the *N_{M}* selected solutions may be different from each other.
iv) The set of classical solutions ${S}_{t} = {\left\{{x}_{{γ}_{t} , m}\right\}}_{m = 1}^{{N}_{M}}$ is then sent to the classical computation component 110 and there, the classical cost function of Eq (53) and the constraint functions of Eqs (54) and (55) are evaluated for each solution, which gives the set of evaluated solutions given in Eq. (66): ${\left\{{x}_{{γ}_{t} , m},C\left({x}_{{γ}_{t} , m}\right),{\left\{{f}_{s}\left({x}_{{γ}_{t} , m}\right)\right\}}_{s = 1}^{{N}_{T}},g\left({x}_{{γ}_{t} , m}\right)\right\}}_{m = 1}^{{N}_{M}} .$ (66)
v) From this set of evaluated solutions, the representative value of the cost function for the quantum state |*ψ*(*γₜ*)〉 is calculated as the average given in Equation (16), specifically stated in Eq. (67): ${C}^{˜} \left({γ}_{t}\right) = \frac{1}{{N}_{M}} {\sum }_{m = 1}^{{N}_{{}_{M}}} C \left({x}_{{γ}_{t} , m}\right)$ (67) and the representative values for the constraints are calculated in a way which accounts for the magnitude of one or more constraint violations for each solution according to Eqs. (17) and (18). In this example, the weighted average for the one or more equality violation functions and the weighted average for the one or more inequality violating functions take the form given in Equations (68) and (69) respectively: ${{f}^{˜}}_{s} \left({γ}_{t}\right) = \frac{1}{{N}_{M}} {\sum }_{m = 1}^{{N}_{M}} {\left|{f}_{s}\left({x}_{{γ}_{t} , m}\right)\right|}^{η} ∀ s = 1 , … , {N}_{T}$ (68) ${g}^{˜} \left({γ}_{t}\right) = \frac{1}{{N}_{M}} {\sum }_{m = 1}^{{N}_{M}} max {\left(0,g\left({x}_{{γ}_{t} , m}\right)\right)}^{η}$ (69) where the parameter *η* > 0 is chosen to be *η* = 1 in the current example. These representative values represent the information in a condensed form on a quality (in terms of cost function value) and feasibility (indicated by the amount of constraint violation) of the solutions represented in the quantum state of the PQC.
vi) The representative values are then fed back into the classical optimization algorithm, as expressed in Equation (70): $COA ← {C}^{˜} \left({γ}_{t}\right) , {{f}^{˜}}_{s} \left({γ}_{t}\right) , {g}^{˜} \left({γ}_{t}\right)$ (70) and the classical optimizer processes these values and updates its initial state accordingly.
vii) Further, all relevant parameters and evaluated function values are added to the archive *A,* i.e. $A \to A + \left\{t,{γ}_{t},{C}^{˜}\left({γ}_{t}\right),{\left\{C\left({x}_{{γ}_{t} , m}\right)\right\}}_{m = 1}^{{N}_{M}},{\left\{{{f}^{˜}}_{s}\left({γ}_{t}\right),{\left\{{f}_{s}\left({x}_{{γ}_{t} , m}\right)\right\}}_{m = 1}^{{N}_{M}}\right\}}_{s = 1}^{{N}_{T}},{g}^{˜}\left({γ}_{t}\right),{\left\{g\left({x}_{{γ}_{t} , m}\right)\right\}}_{m = 1}^{{N}_{M}}\right\}$*.*
viii) Then, a convergence criterion is checked on the classical computation component 110. This can be, for example, whether the maximally allowed number of cost function evaluations has been reached. If the convergence criterion is not met, the iterative process is repeated from step i) above for a next iteration *t* → *t +* 1.

If the convergence criterion is met the optimization is stopped and the portfolio configuration with the largest expected return and thereby satisfying the constraints in total investment and expected risk is subsequently selected from the archive 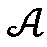 and further returned as the final (optimal) solution *xₒₚₜ* 111.

In other words, the final results *xₒₚₜ* 111 comprise the optimal or near to optimal portfolio strategy that meets the requirement that the total investment at each time is given by a fixed value K and the total expected risk is below a given value *R*.

The proposed method and hybrid quantum-classical computer system utilizing the PQC is effective in producing good solutions for the portfolio problem since the surrogate phase operators have the ability to produce a large variety of solutions in the quantum state of the PQC. Further, the basis-state selection method along with the method to determine appropriate representative cost and constraint function values allows for the classical optimizer to converge toward feasible solutions with near-optimal expected return.

## Claims

1. A method (200) implemented on a hybrid quantum-classical computer system (100) for obtaining one or more optimal solutions *xₒₚₜ* to a given classical constraint linear or non-linear optimization problem, where each solution is specified and identified by a set of parameters *γ_{t, opt},* where the one or more optimal solutions provide optimal values of a cost function *C*(*x*), the cost function *C*(*x*) being a linear or non-linear function of one or more decision variables x, and where the one or more optimal solutions fulfill one or more constraints, the one or more constraints comprising a set of one or more equality constraints *fᵢ*(*x*) = 0 with *i* = 1, ... , *N_{Eq}* and/or a set of one or more inequality constraints *gⱼ*(*x*) ≤ 0 with *j* = 1, .. , *N_{InEq},* where each equality constraint and each inequality constraint comprises a non-linear complex functional form, the hybrid quantum-classical computer system (100) comprising a classical computation component and a quantum computation component, the quantum computation component being a universal or special-purpose quantum computing device, and the method comprising:
performing an iterative procedure, where each iteration *t* comprises the following steps:
- generating (201) a set of parameters *γₜ* on the classical computation component using a classical optimization algorithm and sending the set of parameters *γₜ* to the quantum computation component;
- on the quantum computation component, generating (202) a quantum state |*ψ_{γt}*〉 = *U*(*γₜ*)|*ψ*₀〉 of a plurality of *N* qubits or qudits by executing a parameterized quantum circuit, PQC, with the set of parameters *γ_{t,}* where the one quantum state |*ψ*_{γₜ}〉 comprises a linear superposition of quantum states, the linear superposition of quantum states representing a set of *N_{S}* different classical solutions of the classical constraint linear or non-linear optimization problem, |*ψ*₀〉 is a *N*-qubit or *N*-qudit predefined fixed initial state, and *U*(*γₜ*) is a unitary quantum operator that acts on the plurality of qubits or qudits and is implemented by the PQC;
- on the quantum computation component, using (203) a basis-state selection method to select a set of *N_{M}* ≥ 1 classical solutions, ${S}_{t} = {\left\{{x}_{{γ}_{t} , m}\right\}}_{m = 1}^{{N}_{M}}$*,* from the one quantum state |*ψ_{γₜ}*〉, and sending the selected set 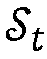 to the classical computation component;
- on the classical computation component, calculating (204) a value of the cost function and a value of each of the one or more constraints for each of the *N_{M}* selected classical solutions *x _{γt}*,*m*, and adding the calculated values to a set of evaluated solutions;
- on the classical computation component, calculating (205) a representative value for the cost function and a representative value for each of the one or more constraints for the quantum state of a parameterized quantum circuit, PQC, with parameters *γₜ* based on the respective calculated values in the set of evaluated solutions, and feeding back the one or more representative values to the classical optimization algorithm;
- on the classical computation component, updating (206) an internal state of the classical optimization algorithm using the one or more representative values;
- repeating (207) the iterative procedure from step (201) onwards, until a stopping criterion is fulfilled;
and the method further comprises:
obtaining (208), on the classical computation component, the one or more optimal solutions *xₒₚₜ* after the latest iteration has been completed by selecting the one or more classical solutions *x _{γt}*,*m* corresponding to an optimized value of the cost function calculated in the iterative procedure and that fulfill the one or more constraints; the method **characterized in that** the unitary quantum operator *U*(*γₜ*) implemented by the PQC is composed of *N_{L}* layers with different choosable sets of parameters ${γ}_{t} = {\left\{{γ}_{l}\right\}}_{l = 1}^{{N}_{L}}$ as $U \left({γ}_{t}\right) = {\prod }_{l = 1}^{{N}_{L}} {U}_{l} \left({γ}_{l}\right)$
and where each layer *l* comprises multiple mixing operators and multiple surrogate phase operators with separately choosable parameter sets *γ_{l,M}* and *γ_{l,P}* respectively, and the unitary operator in each layer of *U*(*γ*) has the form ${U}_{l} \left({γ}_{l}\right) = {e}^{- i {M}_{l} \left({γ}_{l , M}\right)} {e}^{- {iP}_{surrogate , l} \left({γ}_{l , P}\right)}$
where the surrogate phase unitaries in each layer, ~ *e*^{*-i P^{surrogate}, l*(*γ*)}, are generated by a Hermitian surrogate phase operator *P_{surrogate, l}*(*γ_{l,P}*) that is parametrized with the freely choosable parameter sets *γ_{l,P}*;
and where the Hermitian surrogate phase operator *P_{surrogate, l}*(*γ_{l,P}*) in each layer comprise the sum of elementary one-qubit gate operators, two-qubit gate operators or higher-order qubit gate operators, or one-qudit gate operators, two-qudit gate operators or higher-order qudit gate operators, all of which are efficiently implementable on the quantum computation component (120), and where the coefficients of the terms in the sum are given by the freely choosable parameter set *γ_{l,P}*;
and where the mixing unitaries in each layer, ~ *e^{-i Ml}*(*γ^{l,M}*), comprise the freely choosable parameters *γ_{l,M}* and are generated by mixing operators *Mₗ* in each layer, where the mixing operators do not commute with the surrogate phase operators.

2. The method (200) according to claim 1,
**characterized in that**
in addition to updating (206) the internal state of the classical optimization algorithm, an archive 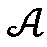 is updated based on the set of parameters *γ_{t,}* the set of classical solutions 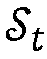 *,* and the corresponding representative values of the cost function and of the one or more constraints.

3. The method (200) according to claim 1 or 2
**characterized in that**
the Hermitian surrogate phase operators *P_{surrogate}, ₗ*(*γ_{l,P}*) in each layer act on the plurality of *N* qubits or qudits, and are implemented with one or more single-qubit angular momentum operators or single-qudit angular momentum operators as ${P}_{surrogate , l} \left({γ}_{l , P}\right) = {\sum }_{all qudits α = 1}^{N} {γ}_{l , P , α} {L}_{z , α} + {\sum }_{all pairs \left(α, β\right) } {γ}_{l , P , α , β} {L}_{z , α} {L}_{z , β} ,$
where *γ_{l,P,α}* and *γ_{l,P,α,β}* with *α, β* = 1, ... , *N* are freely choosable parameter sets indexing all the *N* qubits or qudits, and the choosable parameter sets *γ_{l,P,α,β}* acting as interaction matrix elements are symmetric, *γ_{l,P,α,β}* = *γ_{l,P,β,α}*;
and where *L_{z,α}* is a z-component of the angular momentum operator of a qubit or qudit *α* of total angular momentum *S* = (*d* - 1)/2, where *d* is a number of quantum states for each qubit or qudit, and comprises one or more measurement basis states |*x*〉 of the quantum computation component as eigenstates.

4. The method (200) according to any of claims 1 to 3
**characterized in that**
the basis-state selection method is performed by sampling from the quantum state |*ψ_{γₜ}*〉, comprising:
measuring repeatedly the one quantum state |*ψ_{γₜ}*〉, and adding for each measured state |*x_{γₜ,m}*〉 a classical solution *x_{γₜ,m}* corresponding to the set of selected states 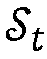 until *N_{M}* states have been measured and added to the set of selected states 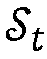 *.*

5. The method (200) according to any of claims 1 to 3,
**characterized in that**
the basis-state selection method is performed by full state tomography from the quantum state |*ψ_{γₜ}*〉 where a set of weights of each basis state is determined, and the basis states corresponding to a subset of the *N_{M}* largest weights is selected and added to the set of selected states, ${S}_{t} = {\left\{{x}_{{γ}_{t} , m}\right\}}_{m = 1}^{{N}_{M}}$*.*

6. The method (200) according to any of claims 1 to 5,
**characterized in that**
calculating (205) a representative value for the cost function and a representative value for each of the one or more constraints for the quantum state of the PQC with parameters *γₜ* based on the respective calculated values in the set of evaluated solutions comprises:
taking the set 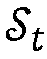 of *N_{M}* classical solutions and determining a solution that occurs most frequently as ${x}_{{γ}_{t}}^{∗} = {argmax}_{{x}_{{γ}_{t} , m}} \left({\sum }_{n = 1}^{{N}_{M}} {δ}_{{x}_{{γ}_{t} , m} ; {x}_{{γ}_{t} , n}}\right) for {x}_{{γ}_{t} , m} , {x}_{{γ}_{t} , n} ∈ {S}_{t} ,$
where *δ*_{*a*;*b*} is the Kronecker delta, and taking the value of the cost function and the value of the one or more constraints corresponding to the solution that occurs most frequently ${x}_{{γ}_{t}}^{∗}$ as the respective representative values.

7. The method (200) according to any of claims 1 to 5,
**characterized in that**
calculating (205) a representative value for the cost function and a representative value for each of the one or more constraints for the quantum state of the PQC with parameters *γₜ* based on the respective calculated values in the set of evaluated solutions comprises:
taking the set 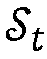 of *N_{M}* classical solutions and calculating a weighted average for the cost function and a weighted average over a magnitude of one or more equality violation functions and/or one or more inequality violating functions, where each violation function comprises a function that violates a respective constraint.

8. The method (200) according to any of claims 1 to 6,
**characterized in that**
calculating (205) a representative value for the cost function and a representative value for each of the one or more constraints for the quantum state of the PQC with parameters *γₜ* based on the respective calculated values in the set of evaluated solutions further comprises performing a penalty function method, where the penalty function method comprises:
calculating a total penalized representative cost function value based on the representative value for the cost function and based on a weighted sum of the one or more representative values of the equality violation functions and/or a weighted sum of the one or more representative values of the inequality violation functions, where each weighted sum comprises a respective penalty factor, each penalty factor being a real and positive, and where each penalty factor is set by the penalty function method on the classical optimization algorithm.

9. The method (200) according to any of claims 1 to 8
**characterized in that**
the classical constraint linear or non-linear optimization problem is an electric vehicle charging optimization problem of a fleet of *N_{EV}* electric vehicles, EVs, where the target is to minimize an electricity cost, the electricity cost being composed of a contribution of cost from buying and selling electricity at the spot market when charging and discharging the EVs and a contribution from a peak charging power necessary over a complete charging schedule, where the one or more constraints comprise one or more of: respecting a minimal limit and maximal limit for the battery state of charge of each EV, fulfilling an energy demand of each EV, and respecting fuse limits of the charging infrastructure at each time slot.

10. The method (200) according to claim 9
**characterized in that**
a search variable *x* defines the charging schedule over *N_{T}* time slots of the fleet of EVs, where *x* is composed of *N_{D}* = *N_{EV}N_{T}* discrete integer variables, $x = \left({l}_{1 , 1}, {l}_{2 , 1}, …, {l}_{n , 1}, {l}_{1 , 2}, …, {l}_{n , s}, …, {l}_{{N}_{EV} , {N}_{T}}\right) ,$
where each integer variable can have only one of *d* values, ℓ_{*n*,*s*} ∈ [0,1, ... , *d* - 1], which specifies the charging power level of vehicle *n* in time slot *s*, where each charging power level amounts to charging with physical electrical power *p*_{ℓ} with *p*₁ < *p*₂ < ... < *p_{d}*, where a value of the electrical power *p*_{ℓ} is predetermined.

11. The method (200) according to any of claims 1 to 8,
**characterized in that**
the method (200) is implemented to obtain optimal compositions of portfolios of financial assets as formulated by the constraint Markowitz model of Modern portfolio theory, where the target is to find the compositions of a portfolio over time as specified by one or more integer variables $x = {\left\{{ω}_{n , s}\right\}}_{n = 1 , s = 1}^{{N}_{Asset} , {N}_{T}}$ where each variable *ω_{n,s}* can take one of *d* discrete values, *ω_{n,s}* ∈ [0,1, ..., *d* - 1], and each variable *ω_{n,s}* specifies an investment amount into an asset *n* at time *s*, andwhere the optimal compositions of the portfolio are given by the one or more integer variables *x* that result in a maximal or near-maximal expected return, where the return comprises one or more transaction costs, where the portfolio fulfills a condition that at each time interval a total investment must be equal to a value *K*, and where an expected risk is below a given value *R*.

12. A hybrid quantum-classical computer system (100) comprising a classical computation component (110) and a quantum computation component (120), the quantum computation component (120) being a universal or special-purpose quantum computing device, the hybrid quantum-classical computer system (100) being configured to perform the method of any of claims 1-11.

## Patentansprüche

1. Verfahren (200), das auf einem hybriden Quanten-Klassik-Computersystem (100) implementiert ist, um eine oder mehrere optimale Lösungen xₒₚₜ für ein gegebenes klassisches lineares oder nichtlineares Optimierungsproblem mit Nebenbedingungen zu erhalten, wobei jede Lösung durch einen Satz von Parametern γ_{t, opt} spezifiziert und identifiziert wird, wobei die eine oder die mehreren optimale(n) Lösung(en) optimale Werte einer Kostenfunktion C(x) bereitstellen, wobei die Kostenfunktion C(x) eine lineare oder nichtlineare Funktion einer oder mehrerer Entscheidungsvariable(n) x ist und wobei die eine oder die mehreren optimale(n) Lösung(en) eine oder mehrere Nebenbedingung(en) erfüllt/erfüllen, wobei die eine oder die mehreren Nebenbedingung(en) einen Satz einer oder mehrerer Gleichungsnebenbedingung(en) fᵢ(x) = 0 mit i = 1, ... , N_{Gl} und/oder einen Satz einer oder mehrerer Ungleichungsnebenbedingung(en) gⱼ(x) ≤ 0 mit j = 1, .. , N_{UnGl} umfassen, wobei jede Gleichungsnebenbedingung und jede Ungleichungsnebenbedingung eine nichtlineare komplexe funktionale Form umfasst, wobei das hybride Quanten-Klassik-Computersystem (100) eine klassische Berechnungskomponente und eine Quantenberechnungskomponente umfasst, wobei die Quantenberechnungskomponente eine universelle oder spezielle Quantenberechnungsvorrichtung ist und wobei das Verfahren umfasst:
Durchführen einer iterativen Prozedur, wobei jede Iteration t die folgenden Schritte umfasst:
- Erzeugen (201) eines Satzes von Parametern γₜ auf der klassischen Berechnungskomponente unter Verwendung eines klassischen Optimierungsalgorithmus und Senden des Satzes von Parametern γₜ an die Quantenberechnungskomponente;
- auf der Quantenberechnungskomponente, Erzeugen (202) eines Quantenzustands |*ψ_{γₜ}*〉 = *U*(*γₜ*)|*ψ*₀〉 einer Vielzahl von N Qubits oder Qudits durch Ausführen einer parametrisierten Quantenschaltung, PQC (Parametrized Quantum Circuit), mit dem Satz von Parametern γₜ, wobei der eine Quantenzustand |*ψ_{γₜ}*〉 eine lineare Überlagerung von Quantenzuständen umfasst, wobei die lineare Überlagerung von Quantenzuständen einen Satz von N_{S} verschiedenen Lösungen des klassischen linearen oder nichtlinearen Optimierungsproblems mit Nebenbedingungen darstellt, |ψ₀〉 ein vordefinierter fester N-Qubit- oder N-Qudit-Anfangszustand ist und U(γₜ) ein unitärer Quantenoperator, der auf die Vielzahl von Qubits oder Qudits wirkt und durch die PQC implementiert wird, ist;
- auf der Quantenberechnungskomponente, Verwenden (203) eines Basiszustandsauswahlverfahrens zum Auswählen eines Satzes von N_{M} ≥ 1 klassischen Lösungen, ${S}_{t} = {\left\{{x}_{{γ}_{t} , m}\right\}}_{m = 1}^{{N}_{M}}$***.*** , aus dem einen Quantenzustand |*ψ_{γₜ}*〉 und Senden des ausgewählten Satzes St an die klassische Berechnungskomponente;
- auf der klassischen Berechnungskomponente, Berechnen (204) eines Werts der Kostenfunktion und eines Werts jeder der einen oder der mehreren Nebenbedingung(en) für jede der N_{M} ausgewählten klassischen Lösungen x_{γₜ,m} und Addieren der berechneten Werte zu einem Satz bewerteter Lösungen;
- auf der klassischen Berechnungskomponente, Berechnen (205) eines repräsentativen Werts für die Kostenfunktion und eines repräsentativen Werts für jede der einen oder der mehreren Nebenbedingung(en) für den Quantenzustand einer parametrisierten Quantenschaltung, PQC, mit Parametern γₜ basierend auf den jeweiligen berechneten Werten im Satz bewerteter Lösungen und Rückführen des einen repräsentativen Werts oder der mehreren repräsentativen Werte zum klassischen Optimierungsalgorithmus;
- auf der klassischen Berechnungskomponente, Aktualisieren (206) eines internen Zustands des klassischen Optimierungsalgorithmus unter Verwendung des einen repräsentativen Werts oder der mehreren repräsentativen Werte;
- Wiederholen (207) der iterativen Prozedur ab Schritt (201), bis ein Stoppkriterium erfüllt ist;
und das Verfahren ferner umfasst:
Erhalten (208), auf der klassischen Berechnungskomponente, der einen oder der mehreren optimalen Lösung (en) xₒₚₜ, nachdem die letzte Iteration abgeschlossen wurde, durch Auswählen der einen oder der mehreren klassischen Lösung (en) x_{γₜ,m}, die einem optimierten Wert der Kostenfunktion, die in der iterativen Prozedur berechnet wurde und die die eine oder die mehreren Nebenbedingung(en) erfüllt, entspricht/entsprechen;
wobei das Verfahren **dadurch gekennzeichnet ist, dass** der durch die PQC implementierte unitäre Quantenoperator U(γₜ) aus N_{L} Schichten mit unterschiedlichen wählbaren Sätzen von Parametern ${γ}_{t} = {\left\{{γ}_{l}\right\}}_{l = 1}^{{N}_{L}}$ besteht als $U \left({γ}_{t}\right) = {\prod }_{l = 1}^{{N}_{L}} {U}_{l} \left({γ}_{l}\right)$
und wobei jede Schicht 1 mehrere Mischoperatoren und mehrere Surrogatphasenoperatoren mit getrennt wählbaren Parametersätzen γ_{l,M} bzw. γ_{l,P} umfasst und der unitäre Operator in jeder Schicht von U(γ) die Form aufweist
Uₗ(γₗ) = e^{-i M^{l}(γ^{l},M)} e^{-i P^{Surrogat}, l(γ^{l},P)}
wobei die Surrogatphasenunitäre in jeder Schicht, ∼ e^{-i P^{Surrogat}, l(γ)}, durch einen hermiteschen Surrogatphasenoperator P_{Surrogat}, ₗ(γ_{l,P}) erzeugt werden, der mit den frei wählbaren Parametersätzen γ_{l,P} parametrisiert ist;
und wobei der hermitesche Surrogatphasenoperator P_{Surrogat, l}(γ_{l,P}) in jeder Schicht die Summe von elementaren Ein-Qubit-Gatter-Operatoren, Zwei-Qubit-Gatter-Operatoren oder höherwertigen Qubit-Gatter-Operatoren oder Ein-Qudit-Gatter-Operatoren, Zwei-Qudit-Gatter-Operatoren oder höherwertigen Qudit-Gatter-Operatoren umfasst, die alle effizient auf der Quantenberechnungskomponente (120) implementierbar sind, und wobei die Koeffizienten der Terme in der Summe durch den frei wählbaren Parametersatz γ_{l,P} gegeben sind;
und wobei die Mischunitäre in jeder Schicht, ~ e^{-iM^{l}(γ^{l},M)}, die frei wählbaren Parameter γ_{l,M} umfassen und durch Mischoperatoren Mₗ in jeder Schicht erzeugt werden, wobei die Mischoperatoren nicht mit den Surrogatphasenoperatoren kommutieren.

2. Verfahren (200) nach Anspruch 1,
**dadurch gekennzeichnet, dass**
zusätzlich zu dem Aktualisieren (206) des internen Zustands des klassischen Optimierungsalgorithmus ein Archiv A basierend auf dem Satz von Parametern γₜ, dem Satz klassischer Lösungen St und den entsprechenden repräsentativen Werten der Kostenfunktion und der einen oder den mehreren Nebenbedingung(en) aktualisiert wird.

3. Verfahren (200) nach Anspruch 1 oder 2,
**dadurch gekennzeichnet, dass**
die hermiteschen Surrogatphasenoperatoren P_{Surrogat, l}(γ_{l,P}) in jeder Schicht auf die Vielzahl von N Qubits oder Qudits wirken und mit einem oder mehreren Einzel-Qubit-Drehimpulsoperatoren oder Einzel-Qudit-Drehimpulsoperatoren implementiert werden als ${P}_{Surrogat , l} \left({γ}_{l , P}\right) = {\sum }_{alle Qudits α = 1}^{N} {γ}_{l , P , α} {L}_{z , α} + {\sum }_{alle Paare \left(α, β\right)}^{N} {γ}_{l , P , α , β} {L}_{z , α} {L}_{z , β ,}$
wobei γ_{l,P,α} und γ_{l,P,α,β} mit α, β = 1, ... , N frei wählbare Parametersätze sind, die alle N Qubits oder Qudits indizieren, und die wählbaren Parametersätze γ_{l,P},_{α,β}, die als Interaktionsmatrixelemente wirken, symmetrisch sind, γ_{l,P,α,β} = γ_{l,P,β,α};
und wobei L_{z,α} eine z-Komponente des Drehimpulsoperators eines Qubit oder Qudit α des Gesamtdrehimpulses S = (d - 1)/2 ist, wobei d eine Anzahl von Quantenzuständen für jedes Qubit oder Qudit ist und einen Messbasiszustand oder mehrere Messbasiszustände |x〉 der Quantenberechnungskomponente als Eigenzustände umfasst.

4. Verfahren (200) nach einem der Ansprüche 1 bis 3, **dadurch gekennzeichnet, dass**
das Basiszustandsauswahlverfahren durch Abtasten aus dem Quantenzustand |ψ_{γt}〉 durchgeführt wird und umfasst:
wiederholtes Messen des einen Quantenzustands |ψ_{γt}〉 und Addieren für jeden gemessenen Zustand |*x_{γₜ,m}*〉 einer klassischen Lösung *x_{γₜ,m}*, die dem Satz ausgewählter Zustände St entspricht, bis N_{M} Zustände gemessen und dem Satz ausgewählter Zustände St hinzugefügt wurden.

5. Verfahren (200) nach einem der Ansprüche 1 bis 3, **dadurch gekennzeichnet, dass**
das Basiszustandsauswahlverfahren durch Vollzustandstomographie aus dem Quantenzustand |ψ_{γt}〉 durchgeführt wird, wobei ein Satz von Gewichtungen jedes Basiszustands bestimmt wird und die Basiszustände, die einer Teilmenge der N_{M} größten Gewichtungen entsprechen, ausgewählt und zum Satz ausgewählter Zustände addiert werden, ${S}_{t} = {\left\{{x}_{{γ}_{t} , m}\right\}}_{m = 1}^{{N}_{M}} .$

6. Verfahren (200) nach einem der Ansprüche 1 bis 5, **dadurch gekennzeichnet, dass**
das Berechnen (205) eines repräsentativen Werts für die Kostenfunktion und eines repräsentativen Werts für jede der einen oder der mehreren Nebenbedingung(en) für den Quantenzustand der PQC mit Parametern γₜ basierend auf den jeweiligen berechneten Werten im Satz bewerteter Lösungen umfasst:
Heranziehen des Satzes St von N_{M} klassischen Lösungen und Bestimmen einer Lösung, die am häufigsten auftritt, als ${x}_{{γ}_{t}}^{∗} = {argmax}_{{x}_{{γ}_{t}} , m} \left({\sum }_{n = 1}^{{N}_{M}} {δ}_{{x}_{{γ}_{t}} , m} ; {x}_{{γ}_{t} , n}\right) für {x}_{{γ}_{t} , m} , {x}_{{γ}_{t} , n} {ϵS}_{t} ,$
wobei δ_{a;b} das Kronecker-Delta ist, und Heranziehen des Werts der Kostenfunktion und des Werts der einen oder der mehreren Nebenbedingung(en), die der Lösung, die am häufigsten auftritt, ${x}_{{γ}_{t}}^{∗}$, entspricht/entsprechen, als die jeweiligen repräsentativen Werte.

7. Verfahren (200) nach einem der Ansprüche 1 bis 5, **dadurch gekennzeichnet, dass**
das Berechnen (205) eines repräsentativen Werts für die Kostenfunktion und eines repräsentativen Werts für jede der einen oder der mehreren Nebenbedingung(en) für den Quantenzustand der PQC mit Parametern γₜ basierend auf den jeweiligen berechneten Werten im Satz bewerteter Lösungen umfasst:
Heranziehen des Satzes St von N_{M} klassischen Lösungen und Berechnen eines gewichteten Durchschnitts für die Kostenfunktion und eines gewichteten Durchschnitts über eine Größe einer oder mehrerer Gleichheitsverletzungsfunktion(en) und/oder einer oder mehrerer Ungleichheitsverletzungsfunktion(en), wobei jede Verletzungsfunktion eine Funktion umfasst, die eine jeweilige Nebenbedingung verletzt.

8. Verfahren (200) nach einem der Ansprüche 1 bis 6, **dadurch gekennzeichnet, dass**
das Berechnen (205) eines repräsentativen Werts für die Kostenfunktion und eines repräsentativen Werts für jede der einen oder der mehreren Nebenbedingung(en) für den Quantenzustand der PQC mit Parametern γₜ basierend auf den jeweiligen berechneten Werten im Satz bewerteter Lösungen ferner ein Durchführen eines Straffunktionsverfahrens umfasst, wobei das Straffunktionsverfahren umfasst:
Berechnen eines gesamten bestraften repräsentativen Kostenfunktionswerts basierend auf dem repräsentativen Wert für die Kostenfunktion und basierend auf einer gewichteten Summe des einen repräsentativen Werts oder der mehreren repräsentativen Werte der Gleichheitsverletzungsfunktionen und/oder einer gewichteten Summe des einen repräsentativen Werts oder der mehreren repräsentativen Werte der Ungleichheitsverletzungsfunktionen, wobei jede gewichtete Summe einen jeweiligen Straffaktor umfasst, wobei jeder Straffaktor reell und positiv ist und wobei jeder Straffaktor durch die Straffunktionsmethode auf dem klassischen Optimierungsalgorithmus festgelegt wird.

9. Verfahren (200) nach einem der Ansprüche 1 bis 8, **dadurch gekennzeichnet, dass**
das klassische lineare oder nichtlineare Optimierungsproblem mit Nebenbedingungen ein Elektrofahrzeugladeoptimierungsproblem einer Flotte von N_{EV} Elektrofahrzeugen, EVs (Electric Vehicles), ist, wobei das Ziel darin besteht, die Stromkosten zu minimieren, wobei die Stromkosten aus einem Kostenbeitrag aus dem Kauf und Verkauf von Strom auf dem Spotmarkt beim Laden und Entladen der EVs und einem Beitrag aus einer Spitzenladeleistung, die über einen vollständigen Ladeplan erforderlich ist, bestehen; wobei die eine oder die mehreren Nebenbedingung(en) eines oder mehrere umfasst/umfassen von: Einhalten einer Mindestgrenze und einer Höchstgrenze für den Batterieladezustand jedes EV, Erfüllen eines Energiebedarfs jedes EV und Einhalten von Sicherungsgrenzen der Ladeinfrastruktur zu jedem Zeitschlitz.

10. Verfahren (200) nach Anspruch 9,
**dadurch gekennzeichnet, dass**
eine Suchvariable x den Ladeplan über N_{T} Zeitschlitze der Flotte von EVs definiert, wobei x aus N_{D} = N_{EV}N_{T} diskreten ganzzahligen Variablen besteht, $x = \left({l}_{1,1}, {l}_{2,1}, …,{l}_{n , 1}, {l}_{1,2}, …, {l}_{n , s}, …, {l}_{{N}_{EV} , {N}_{T}}\right) ,$
wobei jede ganzzahlige Variable nur einen von d Werten aufweisen kann, l_{n,s} ∈ [0, 1, ... , d - 1], der den Ladeleistungspegel eines Fahrzeugs n in Zeitschlitz s angibt, wobei jeder Ladeleistungspegel ein Laden mit physischer elektrischer Leistung p₁ mit p₁ < p₂ < ... < p_{d} bedeutet, wobei ein Wert der elektrischen Leistung p₁ vorgegeben ist.

11. Verfahren (200) nach einem der Ansprüche 1 bis 8, **dadurch gekennzeichnet, dass**
das Verfahren (200) implementiert wird, um optimale Zusammensetzungen von Portfolios von finanziellen Vermögenswerten zu erhalten, wie durch das Markowitz-Modell der modernen Portfoliotheorie unter Nebenbedingungen formuliert, wobei das Ziel darin besteht, die Zusammensetzungen eines Portfolios über die Zeit, wie durch eine oder mehrere ganzzahlige Variable(n) $x = {\left\{{ω}_{n , s}\right\}}_{n = 1 , s = 1}^{{N}_{Vermögenswert} , {N}_{T}}$ spezifiziert, zu finden, wobei jede Variable ω_{n,s} einen von d diskreten Werten, ω_{n,s} ∈ [0, 1, ... , d - 1], annehmen kann und jede Variable ω_{n,s} einen Anlagebetrag für einen Vermögenswert n zu einem Zeitpunkt s angibt und wobei die optimalen Zusammensetzungen des Portfolios durch die eine oder die mehreren ganzzahlige(n) Variable(n) x gegeben sind, die zu einer maximalen oder nahezu maximalen erwarteten Rendite führt/führen, wobei die Rendite ein Transaktionskostenelement oder mehrere Transaktionskosten umfasst, wobei das Portfolio eine Bedingung erfüllt, dass zu jedem Zeitintervall eine Gesamtanlage gleich einem Wert K sein muss, und wobei ein erwartetes Risiko unter einem gegebenen Wert R liegt.

12. Hybrides Quanten-Klassik-Computersystem (100), das eine klassische Berechnungskomponente (110) und eine Quantenberechnungskomponente (120) umfasst, wobei die Quantenberechnungskomponente (120) eine universelle oder spezielle Quantenberechnungsvorrichtung ist, wobei das hybride Quanten-Klassik-Computersystem (100) dazu ausgelegt ist, das Verfahren nach einem der Ansprüche 1 bis 11 durchzuführen.

## Revendications

1. Procédé (200) mis en œuvre sur un système d'ordinateur quantique-classique hybride (100) pour obtenir une ou plusieurs solutions optimales xₒₚₜ à un problème classique donné d'optimisation linéaire ou non linéaire de contraintes, où chaque solution est spécifiée et identifiée par un ensemble de paramètres γ_{t, opt}, où l'une ou les plusieurs solutions optimales fournissent des valeurs optimales d'une fonction de coût C(x), la fonction de coût C(x) étant une fonction linéaire ou non linéaire d'une ou de plusieurs variables de décision x, et où l'une ou les plusieurs solutions optimales respectent une ou plusieurs contraintes, l'une ou les plusieurs contraintes comprenant un ensemble d'une ou de plusieurs contraintes d'égalité fᵢ(x) = 0 avec i = 1, ..., N_{Eq} et/ou un ensemble d'une ou de plusieurs contraintes d'inégalité gⱼ(x) ≤ 0 avec j = 1,.., N_{InEq}, où chaque contrainte d'égalité et chaque contrainte d'inégalité comprend une forme fonctionnelle complexe non linéaire, le système d'ordinateur quantique-classique hybride (100) comprenant un composant de computation classique et un composant de computation quantique, le composant de computation quantique étant un dispositif de computation quantique universel ou spécialisé, et le procédé comprenant :
la réalisation d'une procédure itérative, où chaque itération t comprend les étapes suivantes :
- la génération (201) d'un ensemble de paramètres γₜ sur le composant de computation classique en utilisant un algorithme d'optimisation classique et l'envoi de l'ensemble de paramètres γₜ au composant de computation quantique ;
- sur le composant de computation quantique, la génération (202) d'un état quantique |*ψ_{γₜ}*〉 = *U*(*γₜ*)|*ψ*₀〉 d'une pluralité de N qubits ou qudits en exécutant un circuit quantique paramétré, PQC (Parametrized Quantum Circuit), avec l'ensemble de paramètres γₜ, où l'un état quantique |*ψ_{γₜ}*〉 comprend une superposition linéaire d'états quantiques, la superposition linéaire d'états quantiques représentant un ensemble de N_{S} différentes solutions classiques du problème classique d'optimisation linéaire ou non linéaire de contraintes, |Ψ₀〉 est un état initial fixe prédéfini à N qubits ou N qudits, et U(γₜ) est un opérateur quantique unitaire qui agit sur la pluralité de qubits ou qudits et est mis en œuvre par le PQC ;
- sur le composant de computation quantique, l'utilisation (203) d'un procédé de sélection d'état de base pour sélectionner un ensemble de N_{M} ≥ 1 solutions classiques, ${S}_{t} = {\left\{{x}_{{γ}_{t} , m}\right\}}_{m = 1}^{{N}_{M}}$, à partir de l'un état quantique |*ψ_{γₜ}*〉 et l'envoi de l'ensemble sélectionné St au composant de computation classique ;
- sur le composant de computation classique, le calcul (204) d'une valeur de la fonction de coût et d'une valeur de chacune de l'une ou des plusieurs contraintes pour chacune des N_{M} solutions classiques sélectionnées x_{γₜ,m}, et l'addition des valeurs calculées à un ensemble de solutions évaluées ;
- sur le composant de computation classique, le calcul (205) d'une valeur représentative pour la fonction de coût et d'une valeur représentative pour chacune de l'une ou des plusieurs contraintes pour l'état quantique d'un circuit quantique paramétré, PQC, avec des paramètres γₜ sur la base des valeurs calculées respectives dans l'ensemble de solutions évaluées, et le renvoi de l'une ou des plusieurs valeurs représentatives à l'algorithme d'optimisation classique ;
- sur le composant de computation classique, la mise à jour (206) d'un état interne de l'algorithme d'optimisation classique en utilisant l'une ou les plusieurs valeurs représentatives ;
- la répétition (207) de la procédure itérative depuis l'étape (201), jusqu'à ce qu'un critère d'arrêt soit respecté ;
et le procédé comprend en outre :
l'obtention (208), sur le composant de computation classique, de l'une ou des plusieurs solutions optimales xₒₚₜ après que la toute dernière itération a été achevée en sélectionnant l'une ou les plusieurs solutions classiques x_{γₜ,m} correspondant à une valeur optimisée de la fonction de coût calculée dans la procédure itérative et qui respectent l'une ou les plusieurs contraintes ;
le procédé étant **caractérisé en ce que**
l'opérateur quantique unitaire U(γₜ) mis en œuvre par le PQC est composé de N_{L} couches avec différents ensembles choisissables de paramètres ${γ}_{t} = {\left\{{γ}_{l}\right\}}_{l = 1}^{{N}_{L}}$ sous la forme $U \left({γ}_{t}\right) = {\prod }_{l = 1}^{{N}_{L}} {U}_{l} \left({γ}_{l}\right)$
et où chaque couche l comprend de multiples opérateurs de mélange et de multiples opérateurs de phase de substitution avec des ensembles de paramètres choisissables séparément γ_{l,M} et γ_{l,P} respectivement, et l'opérateur unitaire dans chaque couche de U(γ) a la forme ${U}_{l} \left({γ}_{l}\right) = {e}^{- i {M}_{l} \left({γ}_{l , M}\right)} {e}^{- i {P}_{surrogate , l \left({γ}_{l , P}\right)}}$
où les unitaires de phase de substitution dans chaque couche, ~ **e^{-iP^{surrogate}},** ^{l(γ)} , sont générés par un opérateur de phase de substitution hermitien P_{surrogate,} **ₗ(γ_{l,P})** qui est paramétré avec les ensembles de paramètres choisissables librement γ_{l,P} ;
et où l'opérateur de phase de substitution hermitien P_{surrogate, l}(γ_{l,P}) dans chaque couche comprend la somme d'opérateurs de porte à un qubit, d'opérateurs de porte à deux qubits, ou d'opérateurs de porte à qubit d'ordre plus élevé, ou d'opérateurs de porte à un qudit, opérateurs de porte à deux qudits, ou d'opérateurs de porte à qudit d'ordre plus élevé, élémentaires, dont tous peuvent efficacement être mis en œuvre sur le composant de computation quantique (120), et où les coefficients des termes dans la somme sont donnés par l'ensemble de paramètres choisissables librement γ_{l,P} ;
et où les unitaires de mélange dans chaque couche, ~ e^{-iM^{l}(γ^{l},M)}, comprennent les paramètres choisissables librement γ_{l,M} et sont générés par des opérateurs de mélange M₁ dans chaque couche, où les opérateurs de mélange ne commutent pas avec les opérateurs de phase de substitution.

2. Procédé (200) selon la revendication 1,
**caractérisé en ce que**
en plus de la mise à jour (206) de l'état interne de l'algorithme d'optimisation classique, une archive A est mise à jour sur la base de l'ensemble de paramètres γₜ, de l'ensemble de solutions classiques St, et des valeurs représentatives correspondantes de la fonction de coût et de l'une ou des plusieurs contraintes.

3. Procédé (200) selon la revendication 1 ou 2,
**caractérisé en ce que**
les opérateurs de phase de substitution hermitiens P_{surrogate, l}(γ_{l,P}) dans chaque couche agissent sur la pluralité de N qubits ou qudits, et sont mis en œuvre avec un ou plusieurs opérateurs de moment angulaire à qubit unique ou des opérateurs de moment angulaire à qudit unique sous la forme $\begin{matrix}{P}_{surrogate , l} \left({γ}_{l , P}\right) \\ = {\sum }_{tous les qudits α = 1}^{N} {γ}_{l , P , α} {L}_{z , α} + {\sum }_{toutes les paires \left(α, β\right)} {γ}_{l , P , α , β} {L}_{z , α} {L}_{z , β ,}\end{matrix}$
où γ_{l,P,α} et γ_{l,P,α,β} avec α, β = 1, ..., N sont des ensembles de paramètres choisissables librement indexant tous les N qubits ou qudits, et les ensembles de paramètres choisissables γ_{l,P,α,β} agissant sous forme d'éléments de matrice d'interaction sont symétriques, γ_{l,P,α,β}= γ_{l,P,β,α} ;
et où L_{z,α} est une composante z de l'opérateur de moment angulaire d'un qubit ou qudit α de moment angulaire total S = (d - 1) /2, où d est un nombre d'états quantiques pour chaque qubit ou qudit, et comprend un ou plusieurs états de base de mesure |x〉 du composant de computation quantique en tant qu'états propres.

4. Procédé (200) selon l'une quelconque des revendications 1 à 3,
**caractérisé en ce que**
le procédé de sélection d'état de base est réalisé par échantillonnage à partir de l'état quantique |ψ_{γt}〉, comprenant :
la mesure répétée de l'un état quantique |ψ_{γt}〉, et l'addition, pour chaque état mesuré |*x_{γₜ,m}*〉 d'une solution classique *x_{γₜ,m}* correspondant à l'ensemble d'états sélectionnés St jusqu'à ce que N_{M} états aient été mesurés et additionnés à l'ensemble d'états sélectionnés St.

5. Procédé (200) selon l'une quelconque des revendications 1 à 3,
**caractérisé en ce que**
le procédé de sélection d'état de base est réalisé par tomographie d'état entier à partir de l'état quantique |ψ_{γₜ*,*}, où un ensemble de poids de chaque état de base est déterminé, et les états de base correspondant à un sous-ensemble des N_{M} poids les plus grands sont sélectionnés et additionnés à l'ensemble de états sélectionnés, ${S}_{t} = {\left\{{x}_{{γ}_{t} , m}\right\}}_{m = 1}^{{N}_{M}} .$

6. Procédé (200) selon l'une quelconque des revendications 1 à 5,
**caractérisé en ce que**
le calcul (205) d'une valeur représentative pour la fonction de coût et d'une valeur représentative pour chacune de l'une ou des plusieurs contraintes pour l'état quantique du PQC avec des paramètres γₜ sur la base des valeurs calculées respectives dans l'ensemble de solutions évaluées comprend :
l'emploi de l'ensemble St de N_{M} solutions classiques et la détermination d'une solution qui se produit le plus fréquemment sous la forme ${x}_{{γ}_{t}}^{∗} = {argmax}_{{x}_{{γ}_{t}} , m} \left({\sum }_{n = 1}^{{N}_{M}} {δ}_{{x}_{{γ}_{t}} , m} ; {x}_{{γ}_{t} , n}\right) pour {x}_{{γ}_{t} , m} , {x}_{{γ}_{t} , n} {ϵS}_{t} ,$
où δ_{a;b} est le delta de Kronecker, et l'emploi de la valeur de la fonction de coût et de la valeur de l'une ou des plusieurs contraintes correspondant à la solution qui se produit le plus fréquemment ${x}_{{γ}_{t}}^{∗}$ en tant que valeurs représentatives respectives.

7. Procédé (200) selon l'une quelconque des revendications 1 à 5,
**caractérisé en ce que**
le calcul (205) d'une valeur représentative pour la fonction de coût et d'une valeur représentative pour chacune de l'une ou des plusieurs contraintes pour l'état quantique du PQC avec des paramètres γₜ sur la base des valeurs calculées respectives dans l'ensemble de solutions évaluées comprend :
l'emploi de l'ensemble St de N_{M} solutions classiques et le calcul d'une moyenne pondérée pour la fonction de coût et d'une moyenne pondérée sur une magnitude d'une ou de plusieurs fonctions de violation d'égalité et/ou d'une ou de plusieurs fonctions de violation d'inégalité, où chaque fonction de violation comprend une fonction qui viole une contrainte respective.

8. Procédé (200) selon l'une quelconque des revendications 1 à 6,
**caractérisé en ce que**
le calcul (205) d'une valeur représentative pour la fonction de coût et d'une valeur représentative pour chacune de l'une ou des plusieurs contraintes pour l'état quantique du PQC avec des paramètres γₜ sur la base des valeurs calculées respectives dans l'ensemble de solutions évaluées comprend en outre la réalisation d'un procédé de fonction de pénalité, où le procédé de fonction de pénalité comprend :
le calcul d'une valeur de fonction de coût représentative pénalisée totale sur la base de la valeur représentative pour la fonction de coût et sur la base d'une somme pondérée de l'une ou des plusieurs valeurs représentatives des fonctions de violation d'égalité et/ou d'une somme pondérée de l'une ou des plusieurs valeurs représentatives des fonctions de violation d'inégalité, où chaque somme pondérée comprend une facteur de pénalité respective, chaque facteur de pénalité étant un réel et positif, et où chaque facteur de pénalité est établie par le procédé de fonction de pénalité sur l'algorithme d'optimisation classique.

9. Procédé (200) selon l'une quelconque des revendications 1 à 8,
**caractérisé en ce que**
le problème classique d'optimisation linéaire ou non linéaire de contraintes est un problème d'optimisation de charge de véhicules électriques d'une flotte de véhicules électriques, EVs (Electric Vehicles), N_{EV}, où la cible est de minimiser un coût d'électricité, le coût d'électricité étant composé d'une contribution de coût d'achat et de vente d'électricité au marché au comptant lors de la charge et de la décharge des EVs et d'une contribution d'une puissance de charge de pointe nécessaire durant une planification de charge complète, où l'une ou les plusieurs contraintes comprennent un ou plusieurs parmi : le respect d'une limite minimale et d'une limite maximale pour l'état de charge de batterie de chaque EV, le respect d'une demande en énergie de chaque EV, et le respect de limites de fusible de l'infrastructure de charge à chaque intervalle de temps.

10. Procédé (200) selon la revendication 9,
**caractérisé en ce que**
une variable de recherche x définit la planification de charge durant N_{T} intervalles de temps de la flotte d'EVs, où x est composé de N_{D} = N_{EV}N_{T} variables entières discrètes, $x = \left({l}_{1,1}, {l}_{2,1}, …,{l}_{n , 1}, {l}_{1,2}, …, {l}_{n , s}, …, {l}_{{N}_{EV} , {N}_{T}}\right) ,$
où chaque variable entière peut avoir seulement une de d valeurs, l_{n,s} E [0,1, ..., d - 1], qui spécifie le niveau de puissance de charge de véhicule n dans l'intervalle de temps s, où chaque niveau de puissance de charge équivaut à la charge avec une puissance électrique physique pₗ avec p₁ < p2 < ... < p_{d}, où une valeur de la puissance électrique pₗ est prédéterminée.

11. Procédé (200) selon l'une quelconque des revendications 1 à 8,
**caractérisé en ce que**
le procédé (200) est mis en œuvre pour obtenir des compositions optimales de portefeuilles d'actifs financiers tels que formulés par le modèle de Markowitz de contrainte de théorie de portefeuille moderne, où la cible est de trouver les compositions d'un portefeuille au fil du temps tel que spécifié par une ou plusieurs variables entières $x = {\left\{{ω}_{n , s}\right\}}_{n = 1 , s = 1}^{{N}_{Asset} , {N}_{T}}$ où chaque variable ω_{n,s} peut employer une de d valeurs discrètes, ω_{n, s} E [0,1, ..., d - 1], et chaque variable ω_{n,s} spécifie une quantité d'investissement dans un actif n à un instant s, et où les compositions optimales du portefeuille sont données par l'une ou les plusieurs variables entières x qui ont pour résultat un retour attendu maximal ou quasi-maximal, où le retour comprend un ou plusieurs coûts de transaction, où le portefeuille respecte une condition où, à chaque intervalle de temps, un investissement total doit être égal à une valeur K, et où un risque attendu est inférieur à une valeur donnée R.

12. Système d'ordinateur quantique-classique hybride (100) comprenant un composant de computation classique (110) et un composant de computation quantique (120), le composant de computation quantique (120) étant un dispositif de computation quantique universel ou spécialisé, le système d'ordinateur quantique-classique hybride (100) étant configuré pour réaliser le procédé de l'une quelconque des revendications 1 à 11.
